# EUROPÄISCHE PATENTSCHRIFT

(11) **EP 1 268 103 B1**
(45) Veröffentlichungstag und Bekanntmachung des Hinweises auf die Patenterteilung: **06.10.2004**
(21) Anmeldenummer: 01933778.1
(22) Anmeldetag: 29.03.2001
(51) Int. Cl.: B21K 1/70, B21D 53/24

(54) **VERFAHREN ZUR HERSTELLUNG VON HOHLKÖRPERELEMENTEN, HOHLKÖRPERELEMENT, ZUSAMMENBAUTEIL UND MATRIZE**
METHOD FOR PRODUCING HOLLOW BODIES, HOLLOW BODY, ASSEMBLY AND MOLD
PROCEDE DE PRODUCTION D'ELEMENTS A CORPS CREUX, ELEMENT A CORPS CREUX, ASSEMBLAGE ET MATRICE

(30) Priorität: 31.03.2000 DE 10016227
(43) Veröffentlichungstag der Anmeldung: 02.01.2003
(60) Teilanmeldung: 04010488.7
(73) Patentinhaber: Profil Verbindungstechnik GmbH & Co. KG, 61381 Friedrichsdorf (DE)
(72) Erfinder: BABEJ, Jiri, 35423 Lich (DE); VIETH, Michael, 61118 Bad Vilbel (DE); HUMPERT, Richard, 61191 Rosbach v.d. Höhe (DE)
(74) Vertreter: Manitz, Finsterwald & Partner GbR
(86) Internationale Anmeldenummer: PCT/EP2001/003614
(87) Internationale Veröffentlichungsnummer: WO 2001/072449

(56) Entgegenhaltungen:
- US-A- 2 096 623
- US-A- 2 206 740
- US-A- 3 999 659

## Beschreibung

Die vorliegende Erfindung betrifft ein Verfahren zur Herstellung von Hohlkörperelementen wie Mutterelemente zur Anbringung an üblicherweise aus Blech bestehenden Bauteilen entsprechend dem Oberbegriff vom Anspruch 1. Weiterhin betrifft die vorliegende Erfindung ein Hohlkörperelement nach dem Oberbegriff vom Anspruch 15 sowie Zusammenbauteile, die sich aus Anbringung der Hohlkörperelemente an Bauteilen ergeben und Matrizen, die zur Anbringung der Hohlkörperelemente an Bauteile benutzt werden.

Bei einem Verfahren der eingangs genannten Art, das aus der US-A-2,206,740 bekannt ist, erfolgt die Herstellung von Hohlkörperelementen mit einem zumindest im wesentlichen quadratischen oder rechteckigen Außenumriß durch Ablängung von einzelnen Elementen von einem in Form einer Profilstange oder eines Wickels (Coils) vorliegenden Profil nach vorheriger Stanzung von jeweiligen Löchern in das Profil und gegebenenfalls mit anschließender Ausbildung eines Gewindezylinders , wobei vor oder nach der Lochung des Profils ein Durchsetzvorgang durchgeführt wird, um durch Materialfluß einen konzentrisch zur Lochung oder vorgesehenen Lochung zylindrischen, ovalen, polygonalen oder ringförmigen Vorsprung auf der dem Bauteil zugewandten Seite des Profils zu erzeugen, Bei dem bekannten Verfahren hergestellten Hohlkörperelementen nach der US-A-2,206,740, die im Oberbegriff vom Anspruch 15 berücksichtigt werden, werden jedoch nicht selbststanzend in das Bauteil eingesetzt, sondern dieses muss vorgelocht werden.

Ein ähnliches Verfahren ist aus der US-A-2,093,623 bekannt, wobei die so hergestellten Mutter an das Bauteil angeschweißt werden.

Auch die US-A-3,999,659 zeigt die Herstellung von rechteckigen Elementen aus einem Profil allerdings ohne den Schritt eines Durchsetzvorganges zur Herstellung eines ringförmigen Vorsprungs.

Ein ähnliches Verfahren zu dem der US-A-3,999,659 sowie entsprechende Hohlkörperelemente sind beispielsweise aus der US-PS 4,971,499 bekannt. Hohlkörperelemente werden auch von der Firma Profil Verbindungstechnik GmbH & Co. KG in Deutschland unter der Bezeichnung HI-Rechteckmutter verkauft.

Aufgabe der vorliegenden Erfindung ist es, ein Verfahren der eingangs genannten Art so weiter zu entwickeln, daß Hohlkörperelemente insbesondere rechteckige Mutterelemente bei preisgünstiger Herstellung erhalten werden können, die bessere mechanische Eigenschaften haben, beispielsweise eine höhere Ausziehkraft und eine verbesserte Verdrehsicherheit und darüber hinaus eine herabgesetzte Kerbwirkung zeigen, so daß die Ermüdungseigenschaften von Zusammenbauteilen bestehend aus einem üblicherweise aus Blech bestehenden Bauteil und an diesem angebrachten Hohlkörperelementen auch unter dynamischen Lasten verbessert werden.

Zur Lösung dieser Aufgabe wird bei einem Verfahren der eingangs genannten Art so vorgegangen, daß als Profil ein Profil gewählt wird, das auf seiner später dem Bauteil zugewandten Seite zwei von einander einen Abstand aufweisenden, parallel zu den Längsseiten des Profils verlaufenden und im Querschnitt zumindest im wesentlichen rechteckigen Balken aufweist, die zusätzlich ein Sägezahnmuster aufweisen können und im fertigen Element ein Verdrehsicherungsmerkmal bilden und daß der Vorsprung ggf. anschließend in einem weiteren Preßvorgang zu einem ringförmigen Stanzabschnitt geformt wird.

Hierdurch wird ein rechteckiges oder quadratisches Element mit einem kreisrunden, ovalen oder polygonalen Stanzabschnitt erzeugt.

Die Herstellung aus einem Profil, das entweder in Form einer Profilstange oder in Form eines Wickels vorliegt, bei dem das Profil bereits die Grundform des Elementes aufweist, ermöglicht es, auf verhältnismäßig kostspielige Kaltschlagmaschinen zu verzichten und erlaubt stattdessen die Herstellung der Elemente in einer herkömmlichen Stanzpresse, die mit einem Folgeverbundwerkzeug ausgestattet wird, um die einzelnen Herstellungsschritte durchzuführen. Die Herstellung in einer Stanzpresse unter Anwendung eines Folgeverbundwerkzeuges ist im Vergleich zu der Anwendung von Kaltschlagmaschinen besonders kostengünstig. Die Herstellung auf einer Transferpresse ist unter den selben Bedingungen möglich. Der Vorgang des Abtrennens muß dabei in die erste Stufe verlegt werden.

Besonders bevorzugte Varianten des Herstellungsverfahrens sind den Ansprüchen 2 bis 14 zu entnehmen.

Bei einem Hohlkörperelement nach dem Oberbegriff vom Anspruch 15 sieht die Erfindung vor, dass das Hohlkörperelement auf zwei entgegengesetzten Seiten parallel zueinander erstreckende Balken aufweist, die mit dem Bauteil eine Verdrehsicherung bilden; dass der ringförmige Vorsprung als Stanzabschnitt ausgebildet ist und daß zwischen den Balken und dem ringförmigen Stanzabschnitt ein vertiefter Bereich vorliegt, wobei vorzugsweise Balken nur auf zwei entgegengesetzten Seiten der Hohlkörperelements vorhanden sind und Anlageflächen für das Bauteil bilden, die so groß sind, daß die Flächenpressung unter der Fließgrenze des Bauteils liegt.

Dadurch, daß ein ringförmiger Stanzabschnitt vorliegt, wird ein ringförmiger Stanzbutzen aus dem Bauteil bei der Anbringung des Hohlkörperelementes gestanzt, so daß eine Kerbwirkung im Bereich des im Bauteil erzeugten, kreisrunden Loches nicht mehr zu befürchten ist. Es entfällt sozusagen die bei den bekannten Elementen vorhandenen, rechtwinkligen Ecken, die aufgrund des bisherigen rechteckigen Stanzabschnittes entstanden sind. Hierzu ist anzumerken, daß beim Stand der Technik der rechteckige Stanzabschnitt durch den Querschnitt des verwendeten Profils definiert ist, während bei der vorliegenden Erfindung man von einem besonderen Stanzabschnitt Gebrauch macht, der erfindungsgemäß durch einen Durchsetzvorgang erzeugt wird.

Besonders günstige Varianten des Hohlkörperelementes ergeben sich aus den Ansprüchen 16 bis 22.

Zusammenbauteile bestehend aus einem erfindungsgemäßen Bauteil und einem daran angebrachten erfindungsgemäßen Hohlkörperelement sind in den Ansprüchen 23 bis 25 definiert.

Schließlich befassen sich die Ansprüche 26 bis 29 mit Matrizen, die der Anbringung des erfindungsgemäßen Hohlkörperelementes an ein Bauteil dienen.

Weitere Vorteile des erfindungsgemäßen Verfahrens, des erfindungsgemäßen Hohlkörperelementes, der erfindungsgemäßen Zusammenbauteile und der erfindungsgemäßen Matrizen sind der nachfolgenden Beschreibung von bevorzugten Ausführungsbeispielen, die anhand der Zeichnung näher erläutert werden, zu entnehmen. In der Zeichnung zeigen:
- Fig. 1: eine perspektivische Darstellung eines Abschnittes eines ersten erfindungsgemäßen Profils zur Herstellung von Hohlkörperelementen,
- Fig. 2A - F: eine Reihe von Zeichnungen, die die einzelnen Verfahrensschritte zeigen, die erforderlich sind, um ein erfindungsgemäßes Hohlkörperelement aus dem Profil gemäß Fig. 1 herzustellen,
- Fig. 3: eine teilweise geschnittene Zeichnung zur Erläuterung der Durchführung des Durchsetzvorgangs gemäß Fig. 2B in einer Station eines Folgeverbundwerkzeuges innerhalb einer Stanzpresse,
- Fig. 4A-F: eine Reihe von Zeichnungen, um die genaue Form des aus dem Profil gemäß Fig. 1 hergestellten erfindungsgemäßen Hohlkörperelementes anzugeben,
- Fig. 5: eine teilweise geschnittene Darstellung eines Zusammenbauteils bestehend aus einem Blechteil und einem daran angebrachten erfindungsgemäßen Hohlkörperelement entsprechend der Figur 4,
- Fig. 6A-C: Zeichnungen zur Erläuterung der Auslegung einer erfindungsgemäßen Matrize zur Anbringung des Elements gemäß Fig. 4 an ein Blechteil,
- Fig. 7: eine Zeichnung zur Darstellung der Anbringung eines weiteren Bauteils an das Zusammenbauteil gemäß Fig. 5,
- Fig. 8: eine perspektivische Darstellung eines Abschnittes eines ersten erfindungsgemäßen Profils zur Herstellung von Hohlkörperelementen,
- Fig. 9A-E: eine Reihe von Zeichnungen, um die genaue Form des aus dem Profil gemäß Fig. 8 hergestellten erfindungsgemäßen Hohlkörperelementes anzugeben,
- Fig. 10: eine teilweise geschnittene Darstellung eines Zusammenbauteils bestehend aus einem Blechteil und einem daran angebrachten erfindungsgemäßen Hohlkörperelement entsprechend den Fig. 9A bis E,
- Fig. 11: eine Zeichnung zur Darstellung der Anbringung eines weiteren Bauteils an das Zusammenbauteil gemäß Fig. 10,
- Fig.12A+B: Zeichnungen zur Erläuterung der Auslegung einer erfindungsgemäßen Matrize zur Anbringung des Elements gemäß Fig. 9A bis 9E an ein Blechteil,
- Fig. 13: eine perspektivische Darstellung eines Abschnittes eines ersten erfindungsgemäßen Profils zur Herstellung von Hohlkörperelementen,
- Fig. 14A-E: eine Reihe von Zeichnungen, um die genaue Form des aus dem Profil gemäß Fig. 13 hergestellten erfindungsgemäßen Hohlkörperelementes anzugeben,
- Fig. 15: eine teilweise geschnittene Darstellung eines Zusammenbauteils bestehend aus einem Blechteil und einem daran angebrachten erfindungsgemäßen Hohlkörperelement entsprechend den Figuren 14A bis 14E,
- Fig. 16: eine Zeichnung zur Darstellung der Anbringung eines weiteren Bauteils an das Zusammenbauteil gemäß Fig. 15,
- Fig. 17A-C: Zeichnungen zur Erläuterung der Auslegung einer erfindungsgemäßen Matrize zur Anbringung des Elements gemäß Fig. 14A bis 14E an ein Blechteil,

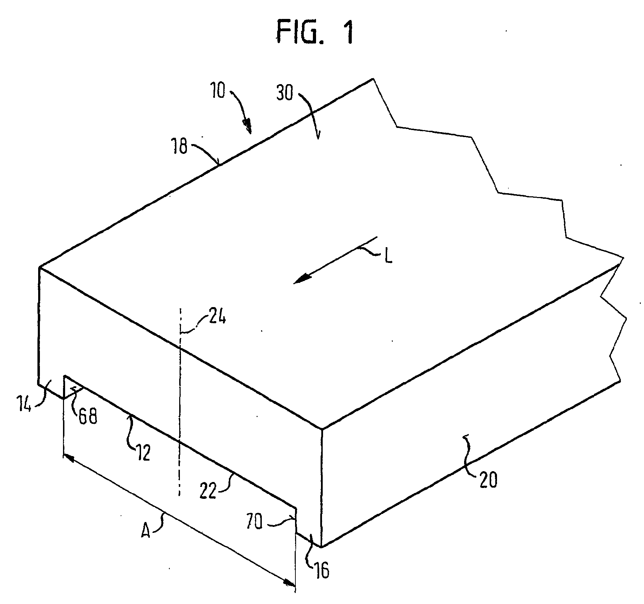

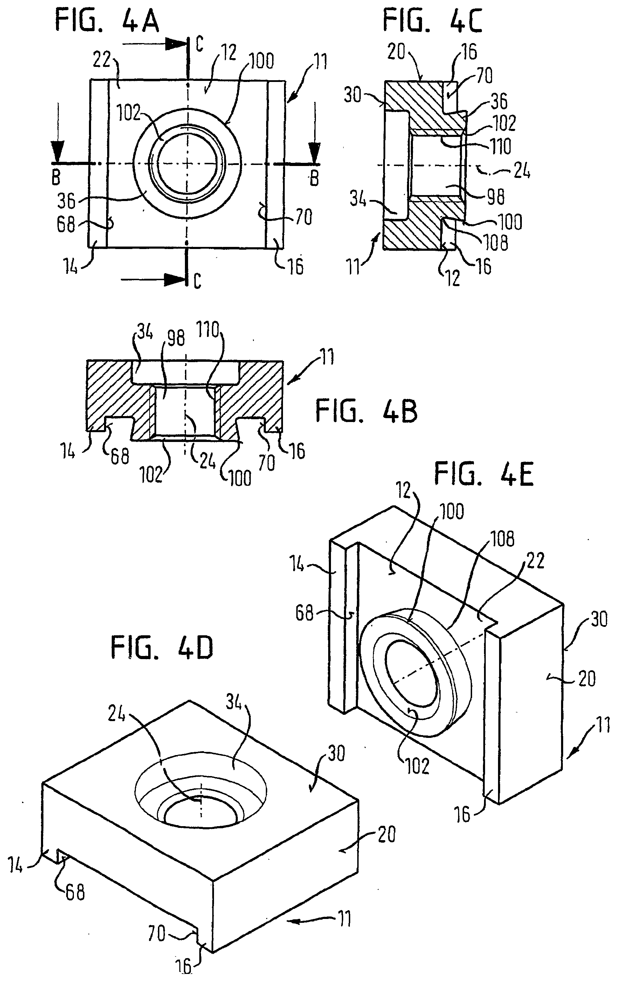

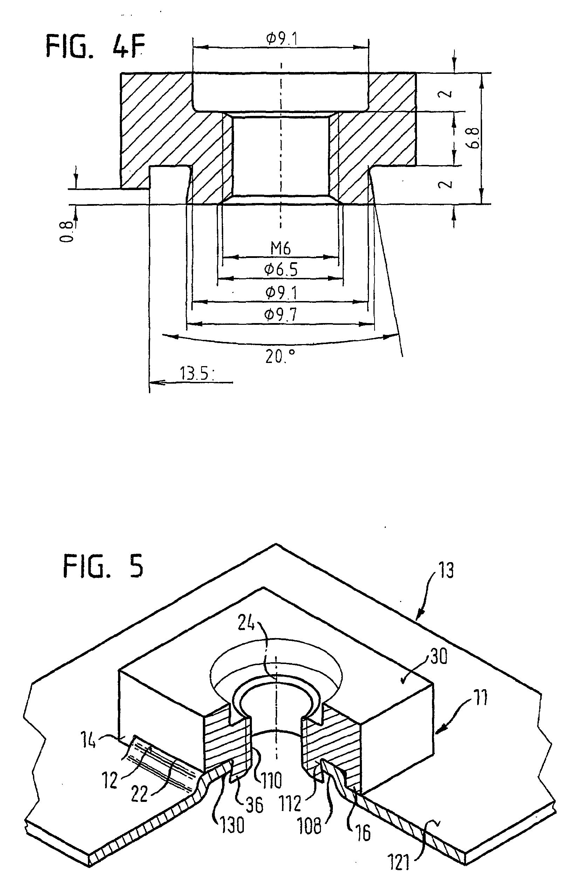

Figur 1 zeigt eine perspektivische Darstellung eines ersten erfindungsgemäßen Profils 10, das zur Herstellung von erfindungsgemäßen Hohlkörperelementen 11 (Fig. 4) verwendet werden kann. Das Profil 10 liegt entweder in Form einer Stange von beispielsweise 6 Metern Länge vor oder wird vom Materialhersteller in Form eines Wickels geliefert. Es handelt sich um ein kalt gewälztes Profil. Bevorzugte Materialien sind alle Stahlsorten nach DIN 1654, aber auch NE-Metalle wie Aluminium, o. Ä.

Das Profil ist im Querschnitt zumindest im wesentlichen rechteckig und weist zusätzlich auf der später dem Bauteil zugewandten Seite 12 zwei voneinander einen Abstand A aufweisende Balken 14 und 16, die parallel zu den Längsseiten 18 und 20 des Profils 10 verlaufen und im Querschnitt ebenfalls im wesentlichen rechteckig sind. Man kann die Form des Profils auch so betrachten, daß es zumindest im wesentlichen rechteckig ist mit einer breiten, jedoch nicht sehr tiefen Nut 22 von im wesentlichen rechteckigem Querschnitt auf der dem Bauteil zugewandten Seite 12, wobei die Nut 22 ebenfalls parallel zu den Längsseiten 18, 20 des Profils verläuft.

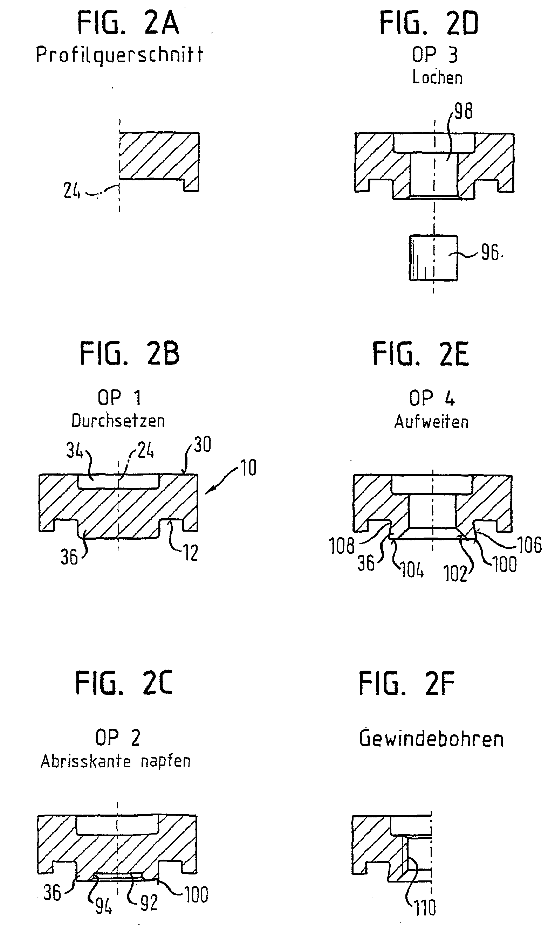

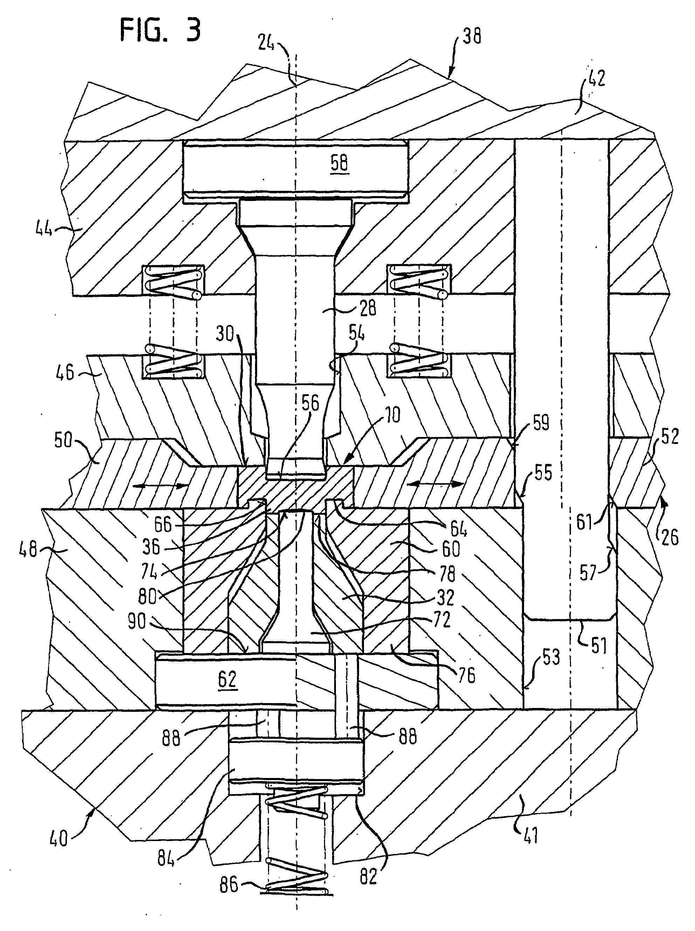

Aus dem erfindungsgemäßen Profil gemäß Fig. 1 wird in diesem Beispiel ein Element 11 gemäß Figuren 4A - F hergestellt, wobei die allgemeine Form des Elementes ohne weiteres aus Fig. 4 ersichtlich ist und erst später genauer beschrieben wird. Zunächst wird das Herstellungsverfahren anhand der Figuren 2A - F und unter Bezugnahme auf Fig. 3 näher erläutert. Figuren 2A - F zeigen alle einen Querschnitt (teilweise nur zur Hälfte) durch das Profil 10 der Figur 1 senkrecht zu dessen Längsrichtung L, wobei die Achse 24 in Figur 2 der Achse 24 der Figur 1 entspricht und senkrecht zu der Längserstreckung L des Profils 10 angeordnet ist. Auch die Querschnittsebene steht senkrecht zur Längsrichtung L.

Das Profil 10 läuft in Längsrichtung L in einer mit einem Folgeverbundwerkzeug 26 (Figur 3) ausgestatteten Stanzpresse 38, wobei das Folgeverbundwerkzeug fünf Stationen aufweist zur Durchführung der in Fig. 2A-E gezeigten Schritte. Die erste Station ist im Querschnitt in Fig. 3 gezeigt und dient dem Durchsetzvorgang gemäß Fig. 2B. Bei diesem Vorgang wird mittels eines Stempels 28, der in Fig. 3 und Fig. 2B von oben kommend auf die Oberseite 30 des Profils 10 drückt und mittels einer unterhalb des Profilstabes 10 angeordneten Matrize 32 (Fig. 3) ein Materialfluß lokal im Profil 10 im Bereich der Achse 24 erzeugt, so daß eine zylindrische Vertiefung 34 in der Oberseite 30 des Profilstabes 10 und ein zylindrischer Vorsprung 36 auf der Bauteilseite 12 des Profilstabes 10 erzeugt wird. Dabei entspricht das Volumen der zylindrischen Vertiefung 34 dem Volumen 36 des zylindrischen Vorsprungs.

Wie bereits erwähnt, zeigt die Fig. 3 eine teilweise geschnittene Darstellung einer ersten Station eines Folgeverbundwerkzeugs 26, das in einer Stanzpresse 38 angeordnet ist, wobei nur ein Teil der Stanzpresse und ein Teil des Folgeverbundwerkzeugs dargestellt ist.

Konkret sieht man in Fig. 3 das an der unteren Gestellplatte der Stanzpresse montierte untere Werkzeug 40 der Stanzpresse, das zur Aufnahme der Matrize 32 sowie andere Teile dient und die obere Gestellplatte 42 der Stanzpresse, an der ein oberes Werkzeug 44 und ein Niederhalter 46 montiert sind. Alternativ hierzu kann es sich bei der Platte 42 um eine Zwischenplatte der Stanzpresse handeln.

Wie gezeigt, wird das Profil 10 auf allen Seiten in der Presse abgestützt.

Zu diesem Zweck weist das untere Werkzeug 40 eine Aufnahme- oder Abstützplatte 48 auf, welche die Matrize 32 aufnimmt und zwei weitere Platten 50 und 52 abstützt, die links und rechts vom Profil 10 angeordnet sind. Die Platten 50 und 52 bilden eine Führung, durch welche der Profilstab 10 in eine Richtung senkrecht zur Ebene der Zeichnung Schritt für Schritt weiterbewegt werden kann. Der Niederhalter 46, der mittels der dargestellten, am oberen Werkzeug 44 abgestützten Feder nach unten gedrückt wird, befindet sich in Anlage mit den Oberseiten der Platten 50 und 52 sowie mit der Oberseite 30 des Profils 10. Der Niederhalter 46 hat eine zylindrische Öffnung in Form einer abgesetzten Bohrung 54, durch welche der Stempel 28 hindurch reicht und somit mit seinem Stirnende 56 in Anlage gegen die Oberseite 30 des Profils 10 gelangen kann. An seinem oberen Ende ist der Stempel 28 im oberen Werkzeug 44 gehalten und wird mit dem Ausgleichsdruckstück 58 der oberen Gestellplatte 42 der Presse bei der Schließbewegung der Presse nach unten gedrückt, bis er die Position gemäß Fig. 3 erreicht hat, und damit den zylindrischen Vorsprung 36 ausgeformt ist. Die Form des zylindrischen Vorsprungs ist durch die Form der Matrize 32 bestimmt. Diese besteht aus einem äußeren Teil 60, der über ein Druckstück 62 an der untersten Platte 41 des Werkzeugs 40 abgestützt ist und somit gegenüber der unteren Platte (nicht gezeigt) der Presse unbeweglich, da die Platte 41 des Werkzeugs 40 an der unteren Platte der Presse befestigt ist.

Der äußere Teil 60 der Matrize weist einen Vorsprung 64 auf, der in der U-förmigen Nut 22 in der Unterseite des Profils 10 im Bereich dieser Station des Folgeverbundwerkzeuges hineinpaßt und eine mittlere kreisrunde Bohrung 66 aufweist, in die das Material des Profils lokal einfließen kann, um den Ringvorsprung 36 auszubilden. Der Vorsprung 64 weist eine Höhe auf entsprechend der Tiefe der U-förmigen Nut 22 und liegt außerdem an den inneren Seitenflächen 68, 70 der zwei Balken 14 und 16 des Profils 10. Die Matrize 32 weist auch einen mittig angeordneten, zylindrischen Pfosten 72 auf, dessen obere Stirnseite 74 in Fig. 3 einen Teil der Unterseite des zylindrischen Vorsprungs 36 abstützt. Die Stirnseite des Pfosten 72 kann leicht ballig ausgeführt sein und um einen geringen Betrag oberhalb des Zylinders 76 liegen, um die nachfolgenden Umformungen des Profils 10 zu unterstützen. Der Pfosten 72 ist unbeweglich und an seinem unteren Ende an einer Platte 62 abgestützt. Der Pfosten 72 befindet sich außerdem innerhalb eines konzentrisch zu ihm angeordneten Zylinders 76, der an seinem unteren Ende ebenfalls auf dem Druckstück 62 abgestützt ist und an seinem oberen Ende eine zylindrische Ringfläche aufweist, die in einer Ebene mit der oberen Stirnseite 74 des Pfostens 72 liegt und mit dieser die untere Begrenzung für den durch die Wirkung des Stempels 28 gebildeten zylindrischen Vorsprung 36 bildet.

Unterhalb der Platte 62 und in einer abgesetzten Bohrung 82 der untersten Platte 41 des Werkzeuges 40 befindet sich ein bewegliches Druckstück 84, das durch eine in dieser abgesetzten Bohrung 82 konzentrisch angeordneten Feder 86 nach oben vorgespannt wird. Oberhalb des Druckstückes 84 befinden sich drei zylindrische Stifte 88, von denen nur zwei in der Figur 3 zu sehen sind, die aber winkelmäßig um 120° zueinander versetzt um die mittlere Längsachse 24 angeordnet sind und sich durch entsprechende Bohrungen im Druckstück 62 erstrecken und die untere Stirnseite 90 des zylindrischen Teils 76 der Matrize berühren.

Bei dem Durchsetzvorgang reicht die Kraft des Stempels 28 (erzeugt durch die Stanzpresse) aus, um durch Materialfluß innerhalb des Profils 10 den zylindrischen Teil 76 der Matrize nach unten in die dargestellte Position zu drücken, so daß das Druckstück 84 ebenfalls die in Figur 3 dargestellte Stellung annimmt.

Bei der Öffnung der Stanzpresse, um den nächsten Hub der Stanzpresse durchzuführen, bewegt sich das obere Werkzeug 44 mit dem Stempel 28 und phasenverschoben dem Niederhalter 46 nach oben weg von den Platten 50 und 52 und die Kraft der Feder 86 reicht dann aus, um über das Druckstück 84 und die Stifte 88 den zylindrischen Teil 76 der Matrize nach oben zu verschieben, so daß ihre obere ringförmige Stirnseite 78 bündig mit der oberen Seite des Vorsprungs 78 liegt und das Profil 10 dabei so angehoben wird, daß der zylindrische Vorsprung 36 nicht mehr vertieft in der Matrize angeordnet ist, sondern oberhalb der Matrize sich befindet, so daß es weitertransportiert werden kann in die nächste Station des Folgeverbundwerkzeuges (nicht gezeigt). Zusätzlich werden die Platten 50 und 52 über ein seitlich angebrachtes Schiebersystem horizontal auseinanderbewegt, um das Profil 10 leichter anheben zu können. Beispielsweise können auf der rechten und linken Seite des oberen Werkzeuges 44 in Fig. 3 Schieber fest angebracht werden (nur ein Schieber gezeigt), die mit ihren unteren Enden in jeweilige Führungen 53 in der unteren Aunahmeplatte 48 geführt sind und im Bereich der Platten 50, 52 Schrägflächen 55, 57 aufweisen, die mit entsprechenden Schrägflächen 59, 61 an Öffnungen der Platten zusammenarbeiten, um die Bewegung der Platten entsprechend den in den Platten gezeigten Doppelpfeilen bei jedem Hub der Presse zu bewirken. Dabei gelangt ein neuer Abschnitt des Profils 10 in den Bereich der Matrize 32, so daß durch Schließen der Presse ein weiterer zylindrischer Vorsprung 36 erzeugt werden kann. Der Abschnitt des Profils 10, der bisher in der Durchsetzstation des Folgeverbundwerkzeuges sich befunden hat, weist nun die Querschnittsform gemäß Fig. 2B auf, wozu zu sagen ist, daß das Volumen der ringförmigen Vertiefung 34 dem Volumen des zylindrischen Vorsprungs 36 entspricht.

In der nächsten Station des Folgeverbundwerkzeuges (nicht gezeigt) wird der Abschnitt gemäß Fig. 2B nunmehr genapft, d.h. mit der ringförmigen Vertiefung 92 gemäß Fig. 2C versehen. Diese ringförmige Vertiefung oder Napf 92 definiert eine Abrißkante 94, welche von Vorteil ist, um in der nachfolgenden Station des Folgeverbundwerkzeuges eine saubere Ausstanzung des Stanzbutzens 96 unter Ausbildung der Lochung 98 gemäß Fig. 2D zu erreichen.

Um den Napf 92 gemäß Fig. 2C zu erzeugen, weist das Folgeverbundwerkzeug in der zweiten Station im Prinzip die gleiche Gestaltung wie in der Zeichnung gemäß Fig. 3 auf, nur hat der mittlere Pfosten 72 an seinem oberen Stirnende eine Gestalt entsprechend dem Napf 92 und ragt um die axiale Tiefe des Napfes oberhalb der oberen Stirnseite 78 des zylindrischen Teils 76 der Matrize hervor. Unter Umständen ist es möglich, die Ausbildung des Napfes gleichzeitig mit der Erzeugung des zylindrischen Vorsprungs 36 zu erreichen. Dies ist jedoch nicht bevorzugt, da man bei der Ausbildung des Napfes gleichzeitig die Form des zylindrischen Vorsprungs 36 korrigiert, so daß dieser eine genau definierte scharfe Ausbildung im Bereich der Kante 100 aufweist.

Nach der Ausbildung des Napfes 92 und der Korrektur der Form des zylindrischen Vorsprungs 36 wird das Profil nochmals aus der Matrize herausgehoben und um einen Schritt weiter transportiert zu der Station, wo die Lochung gemäß Fig. 2D erfolgt. Diese Station ist auch im Prinzip ähnlich der Figur 3 ausgebildet, nur fehlt hier der mittlere Pfosten 72 und die Station weist stattdessen eine Bohrung auf, die einen Kanal zur Entsorgung der Stanzbutzen 96 bildet.

Nach Fertigstellung der Lochung gemäß Fig. 2D wird das Profil noch einmal aus der entsprechenden Matrize herausgehoben und um einen weiteren Schritt transportiert in eine Station, wo der Aufweitvorgang durchgeführt wird, damit der zylindrische Vorsprung 36 die Form bekommt, die in der Fig. 2E gezeigt ist. Man merkt, daß die untere Stirnseite des zylindrischen Vorsprungs 36 mit einer konusförmigen Vertiefung 102 versehen worden ist, die eine Fase bildet, wobei die Konusform in Richtung der freien Stirnseite 104 des zylindrischen Vorsprungs 36 divergiert. Um diese Formgebung zu erreichen, wird die entsprechende Station des Folgeverbundwerkzeuges im Prinzip auch entsprechend der Figur 3 ausgebildet, nur wird hier der mittlere Pfosten 72 im Bereich seines oberen Stirnendes mit einer entsprechenden konusförmigen Fase versehen.

Im übrigen ist im Bereich der Außenmatrize 60 ein Freiraum vorgesehen (nicht gezeigt), damit bei der Ausbildung der konusförmigen Vertiefung 102 die äußere Seitenwand 106 des zylindrischen Vorsprungs 36 die konusförmig nach unten divergierende Form gemäß Fig. 2E erhält und hierdurch eine ringförmige Hinterschneidung 108 um den Ringvorsprung 36 herum gebildet wird.

Nach dem Aufweitvorgang gemäß Fig. 2E wird das Profil 10 wieder aus der Matrize herausgehoben, auch hier durch einen zylindrischen Teil der Matrize ähnlich dem Teil 76 und das Profil wird um einen Schritt weiter transportiert, und zwar in eine letzte Station des Folgeverbundwerkzeuges, wo ein Abschnitt des Profils mit der Länge des Elementes 11 gemäß Fig. 4 abgeschnitten wird. Das so gefertigte Element mit der Lochung 98 wird nun in eine Vorrichtung transportiert, wo an sich bekannter Weise das Gewinde 110 gemäß Fig. 2F gebohrt wird. Bei manchen Anwendungen wird das Hohlkörperelement ohne Gewinde belassen. Beispielsweise könnte die Lochung 98 als Führung gedacht werden, oder zur Aufnahme eines Einsteckteils ausgebildet werden. Darüber hinaus wird häufig im Automobilbau mit gewindeschneidenden oder gewindeformenden Schrauben gearbeitet, so daß das Gewinde 110 erst nach der Anbringung des Hohlkörperelementes an ein Blechteil mit einem Gewinde unter Anwendung einer solchen gewindeschneidenden oder gewindeformenden Schraube versehen wird.

Es sind verschiedene Modifikationen möglich. Einerseits könnte die Ablangung der einzelnen Elemente vom Profil vor dem Aufweitvorgang gemäß Figur 2E stattfinden, wobei der Aufweitvorgang dann auch zur Korrektur der äußeren Formgebung des Elementes dienen könnte, in dem Sinne, daß etwaige Verformungen bei der Ablangung des Elementes korrigiert werden.

Weiterhin ist es möglich, den Durchsetzvorgang mit einem Stempel durchzuführen, der im Bereich seiner das Durchsetzen herbeiführende Stirnende einen Durchmesser aufweist, der zumindest im wesentlichen dem Durchmesser des Lochstempels für die Durchführung des Lochvorganges entspricht. Dies hat zwei Vorteile. Einerseits ist der Durchmesser der ringförmigen Vertiefung 34 dann gleich groß wie der Durchmesser der anschließenden Lochung 98, so daß der Bereich der Vertiefung 34 einen Teil des Gewindezylinders bilden kann und die Bauhöhe des Elementes entsprechend niedriger ausfallen kann. Da der zylindrische Vorsprung 36 die Form gemäß Fig. 2B behält und das Volumen des zylindrischen Vorsprungs 36 dem Volumen der zylindrischen Vertiefung 34 entspricht, fällt die axiale Länge der zylindrischen Vertiefung 34 aufgrund des kleineren Durchmessers des Stempels 28 größer aus, so daß die Dicke des Bereiches des Profils, der beim Lochvorgang gemäß Fig. 2D durchlocht werden muß, kleiner ist und der Lochvorgang leichter vonstatten geht, so daß der Verschleiß am Lochstempel geringer wird.

Wenn das Verfahren so durchgeführt wird wie in den Figuren 2A bis 2E gezeigt, so entsteht ein Mutterelement 11 mit der Gestalt gemäß den Figuren 4A bis 4F. Die entsprechenden Bezugszeichen aus den bisherigen Figuren sind hier eingetragen und sind entsprechend der bisherigen Beschreibung so zu verstehen.

Konkret zeigt die Figur 4B den Querschnitt durch das Mutterelement 11 gemäß Fig. 4A an der Schnittebene B-B, während Figur 4C den Querschnitt senkrecht dazu entsprechend der Schnittebene C-C zeigt. Die Figur 4D zeigt eine perspektivische Darstellung des Elementes 11 von der rechten Seite und von vorne bei einer schräg nach unten gerichteten Betrachtung, während die Figur 4E eine perspektivische Darstellung des Mutterelementes 11 von der Unterseite zeigt.

Figur 4F gibt die konkreten Abmessungen des Elementes an, wenn das Gewinde für eine M6-Schraube ausgelegt ist. In der Darstellung gemäß Fig. 4F entspricht die linke Hälfte der Querschnittszeichnung der linken Seite von Fig. 4B, während die rechte Hälfte der Schnittzeichnung gemäß Fig. 4F dem halben Querschnitt des Elements 11 in Richtung der Längsrichtung L des ursprünglichen Profils entspricht.

Figur 5 zeigt nun ein Zusammenbauteil bestehend aus dem Element gemäß Fig. 4 nach der Anbringung an einem Bauteil 13 in Form eines Blechteils. Man merkt, daß das Blech im Bereich der Unterseite 12 des Elements 11 in die Vertiefung hineingeformt ist, die um den Ringvorsprung 36 herum innerhalb der U-förmigen Nut 22 zwischen den Balken 14 und 16 gebildet ist. Dabei greift das Blech in die Hinterschneidung 108 um den zylindrischen Vorsprung 36 herum, so daß hier ein formschlüssiger Eingriff erfolgt und das Element 11 in Achsrichtung 24 ohne die Anwendung von zerstörenden Kräften nicht mehr vom Blechteil 13 entfernt werden kann. Durch die Einformung des Bleches des Bauteils 13 in die U-förmige Nut 22 zwischen den Balken 14 und 16 wird verhindert, daß das Element 11 gegenüber dem Bauteil 13 gedreht werden kann, d.h. das Element ist in der Lage etwaigen Drehkräften zu widerstehen, die durch die Einführung einer Schraube in das Gewinde 110 entstehen könnten.

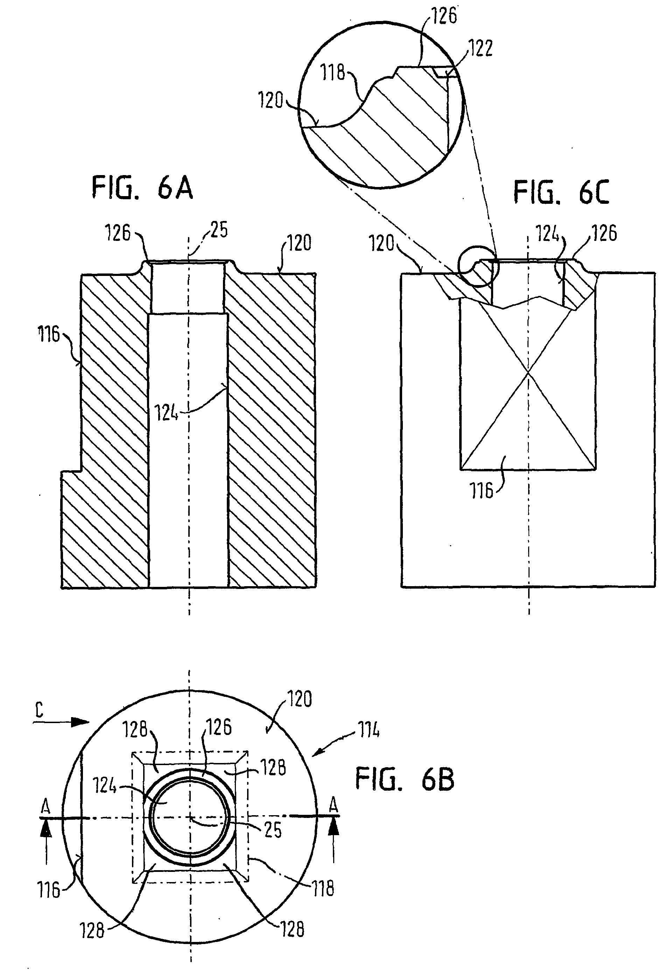

Da das Loch 112 im Bauteil 13 kreisrund ist, entstehen hier keine Kerben, die aufgrund von Kerbwirkung zu einem frühzeitigen Versagen des Zusammenbauteils durch Ermüdungserscheinungen oder Risse führen könnten. Eine Kerbwirkung im Bereich der Enden der Balken ist nicht zu erwarten, da die Enden durch die Abtrennung vom Profilstreifen abgerundet sind und aufgrund der Auflagefläche im Bereich der Balken keine Kerbe im Blechteil erzeugen. Es wird vermieden, daß sich Balken in das Bauteil eingraben und hierdurch Kerbwirkung erzeugen, zu diesem Zweck sind die durch die Unterseite der Balken gebildeten Auflageflächen für das Bauteil so groß bemessen, daß die Flächenpressung unter der Fließgrenze des Bauteils liegt. Das Loch 112 wird bei der Anbringung des Elementes durch den als Stanzabschnitt wirkenden ringförmigen Vorsprung 36 erzeugt, wozu die Matrize gemäß Figuren 6A-6C erforderlich ist.

Wie aus Fig. 6B ersichtlich, weist die Matrize 114 im wesentlichen eine zylindrische, kreisrunde Form auf, wird jedoch auf einer Seite mit einer Abflachung 116 versehen, welche als Formmerkmal dient, das eine korrekte Orientierung der Matrize im Werkzeug sicherstellt. Es ist nämlich erforderlich, daß der im Umriß rechteckige Vorsprung 118 auf der Strinseite 120 der Matrize mit der U-förmigen Nut 22 des Elementes 11 ausgerichtet ist. Diese korrekte Ausrichtung oder Orientierung, d.h. um die Achse 25 der Matrize herum, die mit der Achse 24 des Elements bei dessen Anbringung ausgerichtet werden muß, wird mittels der Abflachung 116 sichergestellt. Die Elemente müssen auch im für die Anbringung verwendeten Setzkopf die richtige Orientierung um die Achse 24 herum aufweisen, was durch die an sich bekannten Setzköpfe ohne weiteres gewährleistet werden kann.

Für die Anbringung des Elementes 11 auf dem Bauteil 13 wird üblicherweise das Bauteil 13 in eine Presse positioniert, das Element 11 wird von einem Setzkopf und von oben kommend auf das Bauteil 13 gelegt und das Bauteil 13 wird auf der anderen Seite auf der Stirnseite der Matrize abgestützt. Beim Schließen der Presse bewegt sich zunächst ein Niederhalter des Setzkopfes in an sich bekannter Weise gegen die obere Seite 122 des Blechteils 13 und drückt diese in Anlage an die Stirnseite 120 der Matrize. Der Setzkopf bewegt dann das Element 11 gegen die Oberseite 120 des Blechteils, wobei die mittlere Achse 24 des Elementes 11 koaxial zu der mittleren Achse 25 der Matrize positioniert ist. Da der Ringvorsprung 36 nach unten über die Unterseite der Balken 14 und 16 hinausragt, berührt die Stirnseite des Ringvorsprungs 36 als erstes das Blechteil und arbeitet mit der Schneidkante 122 des Vorsprungs der Matrize, um einen Stanzbutzen aus dem Blechteil 13 herauszutrennen, wobei dieser Stanzbutzen durch die mittlere Bohrung 124 der Matrize entsorgt wird. Der Vorsprung 118 der Matrize drückt dann das Blechteil in die U-förmige Nut 22 hinein und die ringförmige Nase 126 der Matrize, die geringfügig oberhalb der Plateaubereiche 128 in den vier Ecken des Vorsprungs 118 hervorsteht, drückt das Blech des Bauteils 13, im Randbereich der durch das Ausstanzen des Stanzbutzens entstandenen Lochung 112, in die Vertiefung um den Ringvorsprung 36 hinein und verformt gleichzeitig das Blechmaterial so, daß eine ringförmige Vertiefung 130 im Blechteil erfolgt und das Blechmaterial in die ringförmige Hinterschneidung 108 hinein fließt. Anstelle einer Presse, um die Anbringung des Elements 11 an das Bauteil 13 zu erreichen, kann ein Roboter oder anderes Werkzeug verwendet werden, der bzw. das das Element positionsrichtig gegenüber der Matrize hält und die erforderliche Kraft aufbringt.

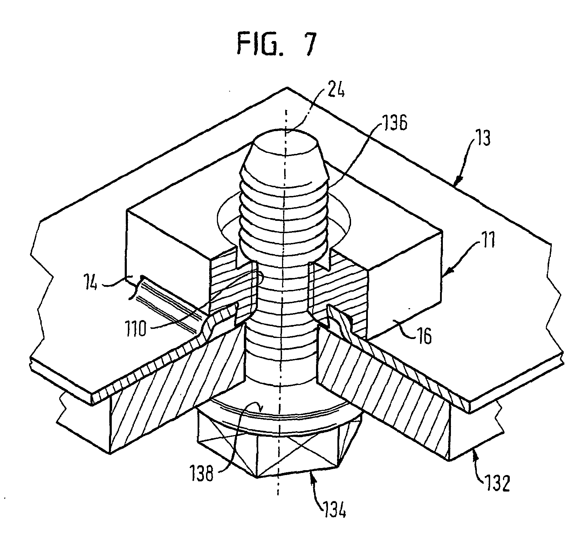

Fig. 7 zeigt nun wie ein weiteres Bauteil 132 mittels einer Schraube 134 an das Bauteil 13 angeschraubt werden kann. Das weitere Bauteil 132 wird nämlich auf der Seite des Bauteils 13 angebracht, die vom Element 11 abgewandt ist, wobei das Gewinde 136 der Schraube 134 in das Gewinde 110 des Elementes 11 eingreift. Die Auflagefläche 138 der Schraube, oder einer eventuell vorgesehenen Scheibe (nicht gezeigt) drückt das weitere Bauteil 132 an das Bauteil 13 so an, daß das Bauteil 13 zwischen den Balken 14 und 16 des Elementes und dem weiteren Bauteil 132 eingeklemmt wird. Dabei ist die axiale Höhe des Ringvorsprungs 36 in Achsrichtung 24 so gewählt, daß sie eine satte Anlage des weiteren Bauteils. 132 am Bauteil 13 nicht hindert, d.h. der zylindrische Vorsprung 36 ragt um maximal die Blechdicke des Bauteils 13 über die Unterseite der Balken 14 und 16 hervor. Mit dieser Konstruktion wird eine außerordentlich hohe Verdrehsicherheit erreicht. Weiterhin zieht die Schraube 34 das Element fest gegen das Blechteil 13, so daß eine axiale Trennung dieser beiden Teile in Achsrichtung 24 nicht möglich ist.

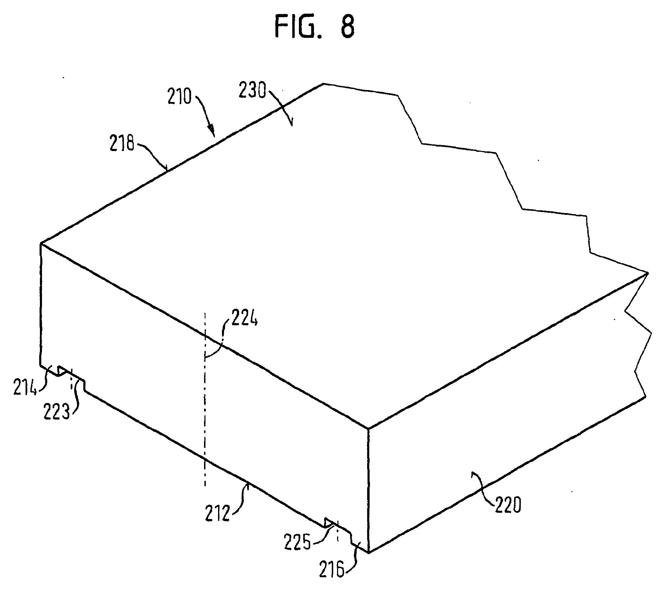

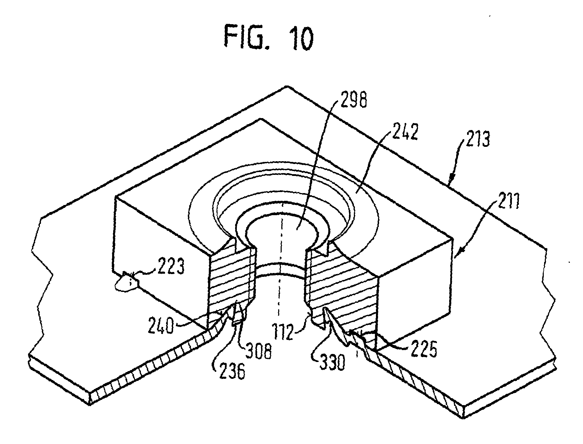

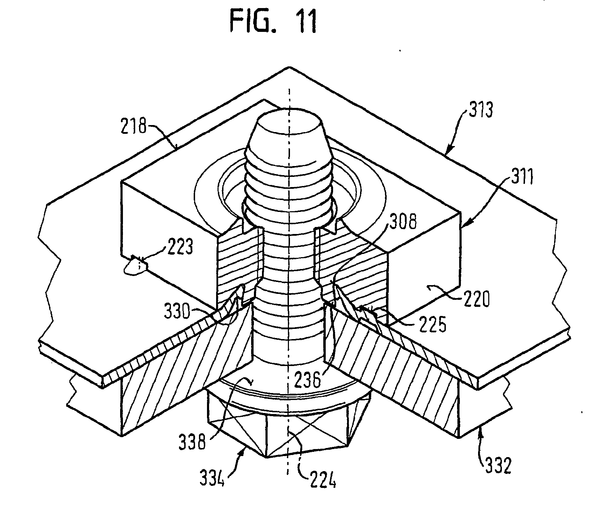

Es wird nun ein weiteres Ausführungsbeispiel des erfindungsgemäßen Profils bzw. des erfindungsgemäßen Hohlkörperelementes unter Bezugnahme auf die Zeichnungen gemäß Figuren 8 bis 12 beschrieben.

Für diese Beschreibung werden die gleichen Bezugszeichen verwendet wie bei der ersten Ausführungsform gemäß Fig. 1 bis 7, jedoch um die Grundzahl 200 erhöht. Teile, die mit dem gleichen Bezugszeichen versehen sind, d.h. nach Abzug der Grundzahl 200 haben die gleiche Funktion, bzw. die gleiche Ausbildung wie die entsprechenden Teile der ersten Ausführungsform gemäß Figuren 1 bis 7, so daß die dort gegebene Beschreibung auch für die entsprechenden Teile dieser Ausführungsform gelten, es sei denn, es wird etwas Gegenteiliges gesagt. Es werden hauptsächlich die Unterschiede beschrieben.

Das Profil 210 der Figur 8 hat auch hier einen im wesentlichen rechteckigen Querschnitt, wobei in der Bauteilseite 212 des Profils hier im Gegensatz zu der Ausführung gemäß Fig. 1 zwei Nuten 223 und 225 durch einen Kaltwalzvorgang gebildet sind, die jeweils rechteckige Querschnitte aufweisen und parallel zu den Längsseiten 218 bzw. 220 des Profils 210 verlaufen, so daß auch hier zwei balkenförmige Bereiche 214 und 216 gebildet werden.

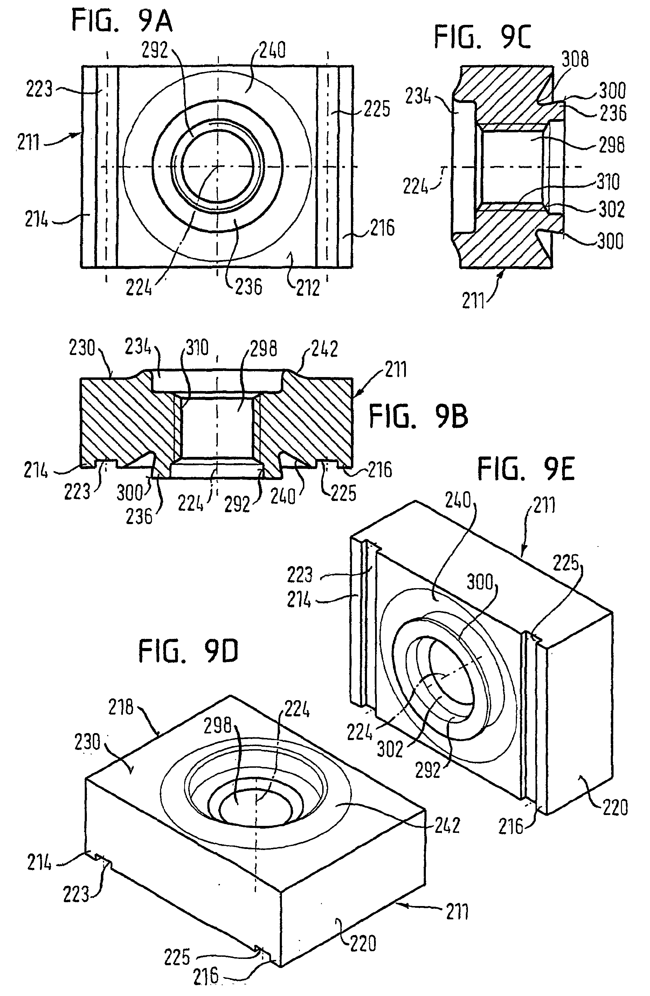

Das Profil 210 gemäß Figur 8 wird in einer Stanzpresse mittels eines Folgeverbundwerkzeuges ähnlich dem bisher beschriebenen Folgeverbundwerkzeug verarbeitet, um Mutterelement gemäß Figur 9A bis 9E zu erzeugen.

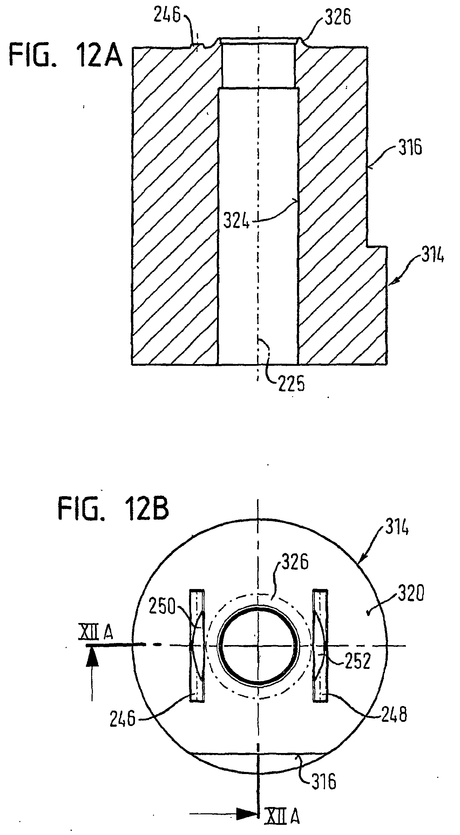

Bei der Herstellung des Mutterelementes 211 gemäß Fig. 9A bis E faßt das Folgeverbundwerkzeug eine weitere Station im Vergleich zu demn bisher beschriebenen Folgeverbundwerkzeug. In dieser zusätzlichen Station, die die erste Station beim Einlaufen des Profils bildet, wird in einer Art umgekehrten Durchsetzvorgang zunächst eine konusförmige Vertiefung 240 in der Unterseite 12 des Profils eingedrückt, wodurch eine entsprechende konusförmige Erhebung 242 an der oberen Seite 230 des Profils entsteht, wobei sowohl die konusförmige Vertiefung 240 als auch die konusförmige Erhebung 242 konzentrisch zur Achse 224 des Elementes angeordnet sind. Nach Ausbildung der konusförmigen Vertiefung 240 und der konusförmigen Erhebung 242 in der ersten Station des Folgeverbundwerkzeuges wird dann die zylindrische Vertiefung 234 und der zylindrische Vorsprung 236 und anschließend der Napf 292 und die Lochung 298 in weiteren Stationen des Folgeverbundwerkzeuges erzeugt in der gleichen Art und Weise wie im Zusammenhang mit den Figuren 2 und 3 beschrieben wurde. In der letzten Station des Folgeverbundwerkzeuges wird dann das Element 211 vom Profilstab 210 durch einen Schervorgang abgetrennt. Die genaue Endform des Hohlkörperelementes geht einwandfrei aus den Figuren 9A bis 9E hervor. Die Anbringung des Elementes 211 auf ein Bauteil 213 erfolgt unter Anwendung einer Matrize 114 gemäß Fig. 12A und B, die gewisse Gemeinsamkeiten mit der Matrize gemäß den Figuren 6A bis C aufweist. Zunächst soll kurz darauf hingewiesen werden, daß die Schnittzeichnung der Fig. 12A hier zwei Schnittebenen zeigt, die jeweils einen Halbschnitt entsprechend den Pfeilen A-A in Fig. 12B zeigt.

Auffallend bei der Matrize 314 gemäß Fig. 12A und B ist vor allem, daß diese zwei balkenartige Vorsprünge 246 und 248 aufweist, die parallel zueinander verlaufen und entsprechend den U-förmigen Nuten 223 und 225 in der Unterseite des Profils ausgebildet sind, wobei die Breite der Balken 248 um die doppelte Dicke des Bauteils kleiner ist als die Breite der entsprechenden Nuten 223 und 225.

Der Ringvorsprung 326 in der Mitte der Stirnseite der Matrize 314 ist hier kreisrund in Draufsicht, wobei die Herstellung des Ringvorsprungs 326 zu jeweiligen bogenförmigen Ausschnitten 250 und 252 in den zwei Balken 246 bzw. 248 führt. Die axiale Höhe des Ringvorsprungs bei der Matrize 314 ist somit größer in dieser Ausführungsform als bei der Matrize gemäß Fig. 6A-C, da sie direkt aus der Stirnseite 320 hinausragt und nicht wie bei der Ausführung gemäß Fig. 6A-C aus einem rechteckigen Vorsprung herausragt.

Bei der Anbringung des Elementes 211 auf dem Bauteil 213 unter Anwendung eines Setzkopfes, beispielsweise in einer Presse, in einem Roboter oder in einem andersartigen Werkzeug, drücken die balkenartigen Nasen 246 und 248 der Matrize das Blechmaterial in die zwei U-förmigen Nuten 223 und 225 des Elementes 211 hinein und bilden hierdurch Verdrehsicherungsnasen im Blechteil 213, die in die entsprechenden Nuten 223 und 225 hineinragen. Der Randbereich 112 um das Stanzloch im Blechteil herum wird in dieser Ausführungsform in die konusförmige Vertiefung 240 um den zylindrischen Vorsprung 236 herum hineingepreßt und wird gleichzeitig in die Hinterschneidung 308 hineingeformt, wobei das Fließen des Blechmaterials in diese Hinterschneidung 308 hinein, durch den Ringvorsprung 326 der Matrize verbessert wird, der zu einer ringförmigen Vertiefung 330 im Blechteil um den zylindrischen Vorsprung 236 herum führt.

Die Anbringung eines weiteren Bauteils 332 erfolgt hier ähnlich wie bei der Ausführungsform gemäß Fig. 7 unter Anwendung einer Schraube 334, wobei auch hier das weitere Bauteil 332 auf der dem Element 311 abgewandten Seite des Bauteils 313 angebracht wird. Besonders günstig bei dieser Ausführungsform ist, daß das Element eine sehr große Auflagefläche für das Bauteil 313 aufweist, da die Nuten 223 und 225 sowie die Ringvertiefung 240 flächenmäßig einen geringeren Anteil der Unterseite des Elementes 311 einnehmen als bei der bisherigen Ausführungsform der Fall ist. Aus diesem Grunde kann das Element 311 für die gleiche Auflagefläche etwas kleiner dimensioniert werden als bei dem Element gemäß der ersten Ausführungsform der Fall ist, so daß hierdurch eine Gewichtsersparnis erreicht wird.

Es wird nun eine dritte Ausführungsform der Erfindung beschrieben, und zwar unter Bezugnahme auf die weiteren Zeichnungen 13 bis 17.

Für diese Beschreibung werden die gleichen Bezugszeichen verwendet wie bei der ersten Ausführungsform gemäß Fig. 1 bis 7, jedoch um die Grundzahl 400 erhöht. Teile, die mit dem gleichen Bezugszeichen versehen sind, d.h. nach Abzug der Grundzahl 400, haben die gleiche Funktion bzw. die gleiche Ausbildung wie die entsprechenden Teile der ersten Ausführungsform gemäß Figuren 1 bis 7, so daß die dort gegebene Beschreibung auch für die entsprechenden Teile dieser Ausführungsform gilt, es sei denn, es wird etwas Gegenteiliges gesagt. Es werden hauptsächlich die Unterschiede beschrieben.

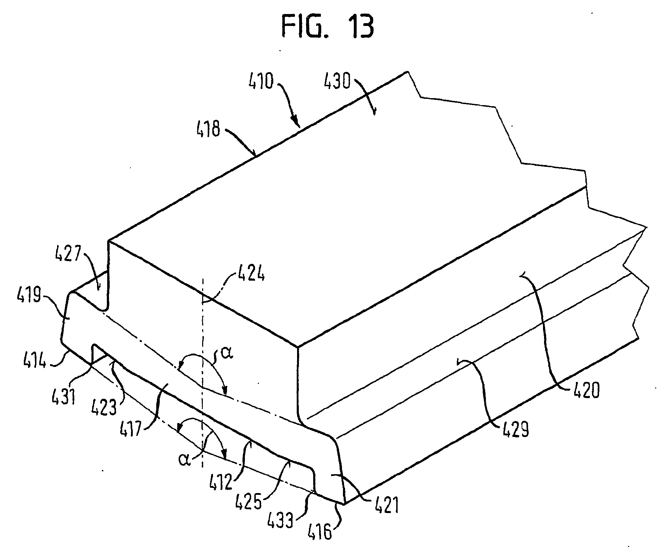

Bei der dritten Ausführungsform gemäß Fig. 13 weist das Profil 410 einen mittleren Bereich 417 mit einem zumindest im wesentlichen rechteckigen Querschnitt auf und links und rechts davon integrale Flügeln 419 und 421, die sich auf der Bauteilseite 412 über den mittleren Bereich 417 hinaus erstrecken und dort zwei Balken 414 und 416 bilden, die parallel zu den Längsseiten 420 des Profils verlaufen und über eine schräge Vertiefung 423 bzw. 425 in die Unterseite des mittleren Bereiches 417 des Profils übergehen. Dabei weisen die Oberseiten 427 und 429 der beiden Flügel 419 bzw. 421 einen deutlichen Abstand von der oberen Seite 430 des mittleren Bereiches 417 des Profil 410 auf und bilden hierdurch Schultern, die schräg zu den Seitenwänden des mittleren Bereiches stehen und miteinander einen Winkel α einschließen, der bezogen auf die der Bauteilseite 412 abgewandten Seite 430 des Profils etwas kleiner als 180° ist und beispielsweise im Bereich von 175° bis 160° liegt.

Die Unterseite der Balken 414 und 416 sind entsprechende der Schultern 427 und 429 schräg gestellt, d.h. bilden den gleichen Winkel α miteinander. Die schrägen Übergangsbereiche 423 und 425 sind ebenfalls parallel zu den durch die Schultern 427 und 429 gebildeten Schrägflächen, so daß auch sie einen entsprechenden Winkel α miteinander bilden. Diese Schrägstellung der Flügel 419 bzw. 421 gegenüber dem mittleren Bereich 417 erfolgt durch die Herstellung des Profils 410 durch Kaltwalzen und hat einen besonderen Vorteil, der etwas später erläutert wird.

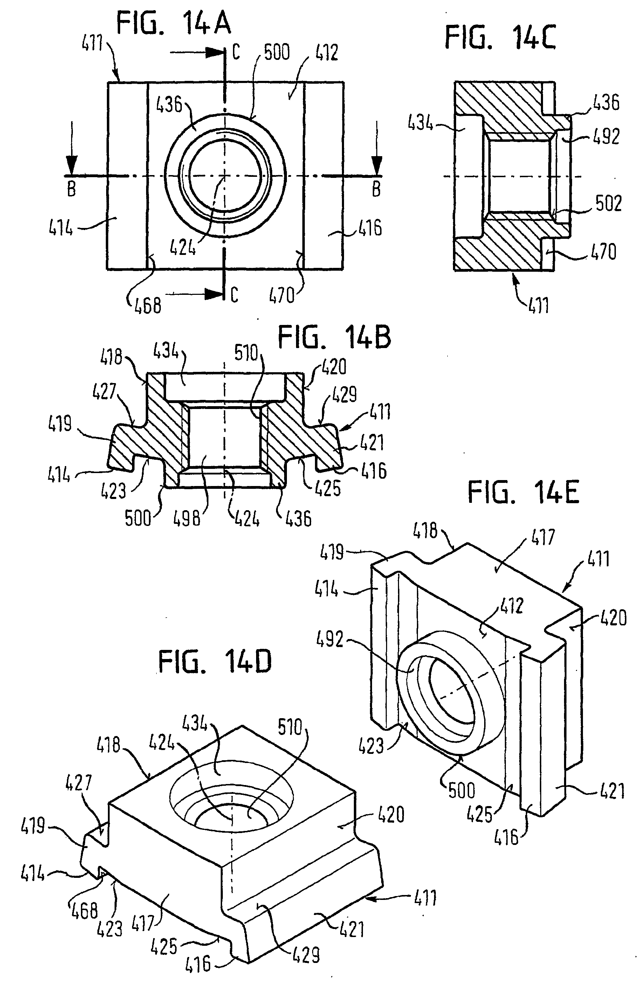

Abgesehen von der besonderen Ausbildung der Flügel 419 bzw. 421 entspricht die Form des Profils 410 im wesentlichen der der Ausführungsform gemäß Fig. 1 und die Herstellung von Mutterelementen aus dem Profil 410 erfolgt im Prinzip in der gleichen Art und Weise wie die Herstellung der Mutterelemente gemäß Fig. 4 wie bisher beschrieben wurde mit Bezug auf die Figuren 2 und 3. Das Herstellungsverfahren wird somit hier nicht im Detail erörtert. Man sieht jedoch aus den Figuren 14A bis 14E, welche das Mutterelement in der fertigen Form zeigen und aus den dort eingesetzten Bezugszeichen, daß dieses Element eine große Ähnlichkeit zu dem Element gemäß den Fig. 4A bis F aufweist.

Ein Unterschied liegt aber hier darin, daß der zylinderförmige Vorsprung 436 keine Hinterschneidung aufweist, wobei dies aber nicht zwingend erforderlich ist und der Ringvorsprung 436 die gleiche Form aufweisen könnte, wie der entsprechende ringförmige Vorsprung 36 der Ausführungsform gemäß Fig. 4.

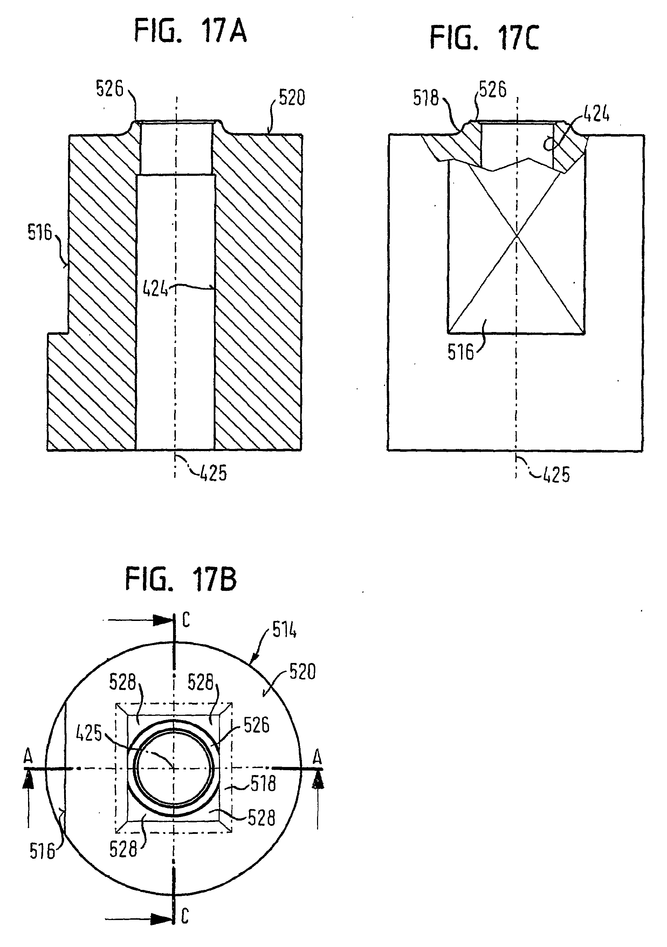

Die Anbringung des Elementes 411 auf ein Bauteil 413, so daß das Zusammenbauteil 415 entsteht, erfolgt auch hier unter Anwendung einer Matrize 514, und zwar der Matrize gemäß Fig. 17A bis C, die identisch mit der Matrize 114 gemäß Fig. 6A bis C ist und hier deshalb nicht näher beschrieben wird, da die Beschreibung für die Ausführungsform gemäß Fig. 6A bis C auch hier gilt. Es sind lediglich in Fig. 17 die gleichen Bezugszeichen verwendet worden wie bei den Fig. 6A bis C, jedoch um die Grundzahl 400 erhöht.

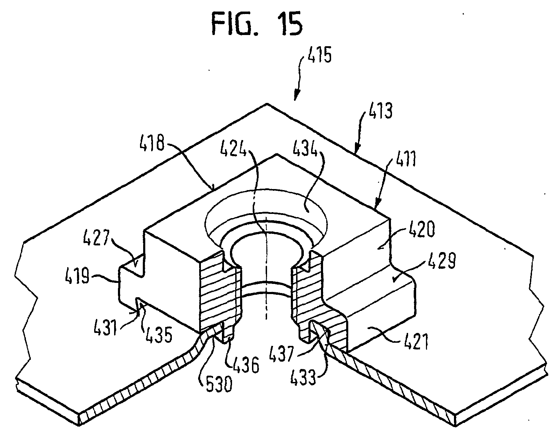

Bei der Anbringung des Elementes 411 zur Ausbildung des Zusammenbauteils gemäß Fig. 15, wird jedoch bei diesem Ausführungsbeispiel ein Setzkopf verwendet, der es erlaubt, die Flügel 419 und 421 sozusagen flach zu pressen, so daß die Schultern 427 bzw. 429 nicht mehr miteinander einen Winkel α von weniger als 180° einschließen, sondern nunmehr in einer Ebene liegen. Hierdurch schwenken die Flügel 419 bzw. 421 sozusagen um eine Drehachse im Bereich der inneren Enden der Schrägflächen 423 bzw. 425, so daß die inneren Seitenkanten 431 und 433 der Balken 414 und 416 sich aufeinander zu bewegen und im eingebauten Zustand einen kleineren Abstand voneinander aufweisen als vor Anbringung des Elementes 411. Das bedeutet, daß nunmehr eine Hinterschneidung 435 bzw. 437 (Fig. 15) im Bereich der inneren Seitenflächen 468 und 470 der Balken 414 bzw. 416 sich ausgebildet hat und daß das Blechmaterial nunmehr formschlüssig in diese Hinterschneidung eingreift, so daß eine axiale Trennung des Elementes 411 in Richtung der Achse 424 vom Bauteil 413 nicht mehr möglich ist. Wird auch der zylindrische Vorsprung 436 des Elementes 411 mit einer Hinterschneidung ausgebildet, so führt die Schwenkbewegung der Flügel 419 und 421 dazu, daß Blechmaterial (auch) in diese Hinterschneidung hineingedrückt wird, wodurch eine noch sicherere Anbringung des Elementes 411 am Bauteil 413 erfolgt, d.h. die Ausführungsform hat einen sehr hohen Ausziehwiderstand.

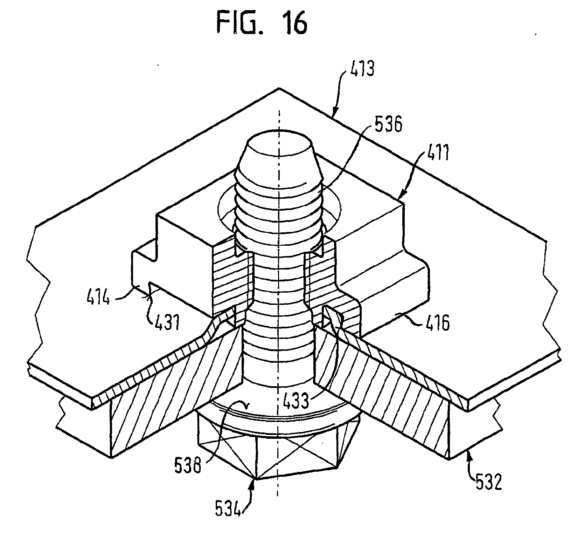

Die Situation bei der Anbringung eines weiteren Bauteils 532 gestaltet sich dann gemäß Fig. 16 und ist im Prinzip der Zusammenbausituation gemäß Fig. 7 gleichzusetzen, was durch die Verwendung der gleichen Bezugszahlen (jedoch um die Grundzahl 400 erhöht) zum Ausdruck kommt.

Die hier beschriebenen Funktionselemente können zum Beispiel aus allen Materialien hergestellt werden, die die Festigkeitsklasse 5.6 oder höher erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Verfahren zur Herstellung von Hohlkörperelementen (11; 211; 411) wie Mutterelemente zur Anbringung an üblicherweise aus Blech bestehenden Bauteilen (13; 213; 413), insbesondere zur Herstellung von Hohlkörperelementen mit einem zumindest im wesentlichen quadratischen oder rechteckigen Außenumriß durch Ablangung von einzelnen Elementen von einem in Form einer Profilstange oder eines Wickels vorliegenden Profil (10; 210; 410) nach vorheriger Stanzung von jeweiligen Löchern (98; 298; 498) in das Profil und gegebenenfalls mit anschließender Ausbildung eines Gewindezylinders (110; 310; 510), wobei vor oder nach der Lochung des Profils ein Durchsetzvorgang durchgeführt wird, um durch Materialfluß einen konzentrisch zur Lochung (98; 298; 498)oder vorgesehenen Lochung zylindrischen oder ringförmigen Vorsprung (36; 236; 436) auf der dem Bauteil zugewandten Seite (12; 212; 412) des Profils zu erzeugen,
**dadurch gekennzeichnet,**
**daß** als Profil (10; 210; 410) ein Profil gewählt wird, das auf seiner später dem Bauteil zugewandten Seite (12; 212; 412) zwei von einander einen Abstand aufweisenden, parallel zu den Längsseiten (18, 20; 218, 220; 418, 420) des Profils verlaufenden und im Querschnitt zumindest im wesentlichen rechteckigen Balken (14, 16; 214, 216; 414, 416) aufweist, die zusätzlich ein Sägezahnmuster aufweisen können und im fertigen Element (11; 211; 411) ein Verdrehsicherungsmerkmal bilden und daß der Vorsprung (36; 236; 436) ggf. anschließend in einem weiteren Preßvorgang zu einem ringförmigen Stanzabschnitt geformt wird.

2. Verfahren nach Anspruch 1,
**dadurch gekennzeichnet,**
**daß** der Durchsetzvorgang dadurch durchgeführt wird, daß das Profil (10) im Bereich des zu erzeugenden Vorsprungs auf eine Matrize (32) mit einer Vertiefung (66) mit einer zur Form des erwünschten Vorsprungs (36) komplementären Form abgestützt ist und auf allen verbleibenden Seitenbereichen in einem entsprechenden Werkzeug (46, 48, 50, 52, 60) gehalten wird und daß zur Erzeugung des Materialflusses in die Vertiefung (66) der Matrize (32) hinein, ein Stempel (28) in das Material an der dem Ringvorsprung abgewandten Seite (30) des Profils (10) hineingedrückt wird.

3. Verfahren nach Anspruch 2,
**dadurch gekennzeichnet,**
**daß** der Stempel (28) einen Außendurchmesser aufweist, der zumindest im wesentlichen dem des erwünschten Vorsprungs (36) entspricht.

4. Verfahren nach Anspruch 2,
**dadurch gekennzeichnet,**
**daß** der Stempel einen Außendurchmesser aufweist, der zumindest im wesentlichen dem Durchmesser der noch zu erzeugenden Lochung entspricht.

5. Verfahren nach einem der vorhergehenden Ansprüche,
**dadurch gekennzeichnet,**
**daß** in einem weiteren Verfahrensschritt ein Napfvorgang an der freiliegenden Stirnseite des Ringvorsprungs durchgeführt wird, um eine Abrißkante (94) für den Stanzenbutzen (96) bei der nachfolgenden Lochung zu erzeugen.

6. Verfahren nach Anspruch 5,
**dadurch gekennzeichnet,**
**daß** nach dem Napfvorgang das Element unter Anwendung eines Lochstempels und einer entsprechenden Matrize gelocht wird, wobei der Lochstempel konzentrisch zum durch den Napfvorgang erzeugten Napf (92) geführt wird.

7. Verfahren nach einem der vorhergehenden Ansprüche,
**dadurch gekennzeichnet,**
**daß** nach der Lochung ein Aufweitvorgang durchgeführt wird, um den gelochten Vorsprung (36; 236) mit einer zumindest im wesentlichen konusförmigen in Richtung seiner freien Stirnseite divergierenden Außenwand (106; 306) zu versehen.

8. Verfahren nach Anspruch 7,
**dadurch gekennzeichnet,**
**daß** beim Aufweitvorgang eine eine Fase bildende, konusfermige Vertiefung (102, 302, 502), konzentrisch zur Lochung (98) im freien Stirnende des Vorsprungs erzeugt wird, die in Richtung der Stirnfläche des Ringvorsprungs ebenfalls divergiert.

9. Verfahren nach Anspruch 7 oder 8,
**dadurch gekennzeichnet,**
**daß** die Ablangung des Elementes vom Profil (10, 210, 410) nach dem Aufweitvorgang erfolgt.

10. Verfahren nach einem der Ansprüche 7 oder 8,
**dadurch gekennzeichnet,**
**daß** der Aufweitvorgang als Kalibrierschritt nach der Ablangung des jeweiligen Elementes vom Profil erfolgt.

11. Verfahren nach einem der vorhergehenden Ansprüche,
**dadurch gekennzeichnet,**
**daß** die jeweiligen Verfahrensschritte in einer Stanzpresse (36) unter Anwendung eines Folgeverbundwerkzeugs (26) durchgeführt werden.

12. Verfahren nach einem der vorhergehenden Ansprüche
**dadurch gekennzeichnet,**
**dass** das Profil (410) im Querschnitt einen zumindest im wesentlichen rechteckigen mittleren Bereich (417) und links und rechts davon mit diesem integrale Flügel (419, 421) aufweist, die sich auf der Bauteilseite (412) über den mittleren Bereich hinaus erstrecken und dort die zwei Balken (414, 416) bilden, die parallel zu den Längsseiten (418, 420) des Profils verlaufen und über eine schräge Vertiefung (423, 425) in die Unterseite des mittleren Bereiches des Profils übergehen, wobei die Oberseiten (427, 429) der Flügel von der Oberseite des mittleren Bereichs des Profils einen deutlichen Abstand aufweisen und hierdurch Schultern bilden, die schräg zu den Seitenwänden des mittleren Bereiches stehen und miteinander einen Winkel (α) einschließen, der bezogen auf die der Bauteilseite abgewandten Seite des Profils etwas kleiner als 180° ist, beispielsweise im Bereich von 175° bis 160° liegt, wobei bei der Anbringung des Elements an ein Blechteil (413) die schräg stehenden Flügel flach gepresst werden.

13. Verfahren nach einem der Ansprüche 1 bis 11,
**dadurch gekennzeichnet,**
**dass** als Profil (210) ein Profil gewählt wird, das zwei im Bereich der Längsseiten (218, 220) auf der später dem Bauteil (213) zugewandten Seite (212) Nuten (218, 220) aufweist deren den Längsseiten zugewandten Seiten die Balken (214, 216) auf der inneren dem Vorsprung (236) zugewandten Seiten begrenzen).

14. Verfahren nach einem der vorhergehenden Ansprüche,
**dadurch gekennzeichnet,**
**dass** als Profil (10; 210; 410) ein kalt gewalztes Profil gewählt wird.

15. Hohlkörperelement (11; 211; 411) zur Anbringung an ein insbesondere aus Blech bestehendes Bauteil, wobei das Hohlkörperelement eine senkrecht zur Bauteilseite (12; 212; 412) verlaufende, mittig angeordnete Lochung (98, 298, 498) aufweist, die gegebenenfalls einen Gewindezylinder (110; 310; 510) aufweisen kann und auf der dem Bauteil zugewandten Seite (12; 212, 412) des Hohlkörperelementes und konzentrisch zur Lochung ein ringförmiger Vorsprung (36; 236; 436) vorliegt,
**dadurch gekennzeichnet,**
**dass** das Hohlkörperelement auf zwei entgegengesetzten Seiten parallel zueinander erstreckende Balken (14, 16; 214, 216; 414, 416) aufweist, die mit dem Bauteil eine Verdrehsicherung bilden; dass der ringförmige Vorsprung (36; 236; 436) als Stanzabschnitt ausgebildet ist und daß zwischen den Balken und dem ringförmigen Stanzabschnitt ein vertiefter Bereich (22; 240; 422) vorliegt, wobei vorzugsweise Balken nur auf zwei entgegengesetzten Seiten der Hohlkörperelements vorhanden sind und Anlageflächen für das Bauteil bilden, die so groß sind, daß die Flächenpressung unter der Fließgrenze des Bauteils liegt.

16. Hohlkörperelement nach Anspruch 15,
**dadurch gekennzeichnet,**
**daß** auf der Bauteilseite des Hohlkörperelementes das Stirnende (104; 304; 504) des ringförmigen Vorsprungs (36; 236; 436) weiter vorsteht als die Balken (14, 16; 214, 216; 414, 416).

17. Hohlkörperelement nach Anspruch 15 oder 16,
**dadurch gekennzeichnet,**
**daß** der vertiefte Bereich (22; 422) zwischen den Balken im Außenumriß zumindest im wesentlichen rechteckig ist und daß der Ringvorsprung (36; 436) in der Mitte der Vertiefung angeordnet ist und an allen Seiten einen Abstand von der Begrenzung der Vertiefung aufweist.

18. Hohlkörperelement nach einem der Ansprüche 15 oder 16,
**dadurch gekennzeichnet,**
**daß** die zwei auf entgegengesetzten Seiten des Hohlkörperelementes parallel zueinander erstreckende Balken (214, 216) durch zwei ebenfalls parallel zueinander verlaufende Nuten (223, 225) begrenzt bzw. gebildet sind, die zumindest im wesentlichen einen rechteckigen Querschnitt aufweisen und daß die Ringvertiefung (240) eine konusförmige Vertiefung ist, die in der Bauteilseite (212) des Hohlkörperelementes im Bereich zwischen den zwei Nuten ausgebildet ist, wobei die konusförmige Vertiefung in Richtung auf die Bauteilseite (212) zugehend divergiert.

19. Hohlkörperelement nach Anspruch 18,
**dadurch gekennzeichnet,**
**daß** auf der der Bauteilseite (212) abgewandten Seite (230) des Hohlkörperelementes (211) eine konusförmige Ringschulter (242) vorliegt mit in etwa komplementärer Form zu der konusförmigen Ringvertiefung (240) in der Bauteilseite des Elements.

20. Hohlkörperelement nach Anspruch 15,
**dadurch gekennzeichnet,**
**daß** es im Querschnitt einen zumindest im wesentlichen rechteckigen mittleren Bereich (417) und links und rechts davon mit diesem integrale Flügel (419, 421) aufweist, die sich auf der Bauteilseite (412) über den mittleren Bereich hinaus erstrecken und dort zwei Balken (414, 416) bilden, die parallel zu den Längsseiten (420) des Profils verlaufen und über eine schräge Vertiefung (423, 425) in die Unterseite des mittleren Bereiches des Profils übergehen, wobei die Oberseiten (427, 429) der Flügel von der Oberseite des mittleren Bereichs des Profils einen deutlichen Abstand aufweisen und hierdurch Schultern bilden, die schräg zu den Seitenwänden des mittleren Bereiches stehen und miteinander einen Winkel (α) einschließen, der bezogen auf die der Bauteilseite abgewandten Seite des Profils etwas kleiner als 180° ist, beispielsweise im Bereich von 175° bis 160° liegt.

21. Hohlkörperelement nach einem der vorhergehenden Ansprüche 15 bis 20,
**dadurch gekennzeichnet,**
**daß** der ringförmige Stanzabschnitt (36; 236; 436) eine zumindest im wesentlichen konusförmige Außenwand aufweist, die in Richtung auf das freie Stirnende (104; 304; 504) des Stanzabschnitts gehend divergiert und hierdurch mit dem Stirnende eine Stanzkante (100; 300; 500) bildet, wobei die konusförmig verlaufende Außenwand des ringförmigen Stanzabschnittes mit der Vertiefung (108; 308) eine Hinterschneidung bildet, die zur Aufnahme von Blechmaterial ausgelegt ist.

22. Hohlkörperelement nach einem der vorhergehenden Ansprüche 15-21,
**dadurch gekennzeichnet,**
**daß** das Stirnende des ringförmigen Stanzabschnitts eine eine Fase bildende konusförmige Vertiefung (102) aufweist, die in Richtung der freien Stirnseite des Stanzabschnitts gehend divergiert.

23. Zusammenbauteil bestehend aus einem Bauteil (13; 213; 413) und einem daran angebrachten Hohlkörperelement (11; 211; 411) nach einem der vorhergehenden Ansprüche 15 bis 22,
**dadurch gekennzeichnet,**
**daß** das Bauteil in die durch den ringförmigen Stanzabschnitt gebildete Hinterschneidung (108; 308) und im vertieften Bereich (22; 240, 223, 225; 422) benachbart zu den genannten Balken hineingeformt ist und daß Hohlkörperelement hierdurch auszieh- und verdrehsicher mit dem Bauteil verriegelt ist.

24. Zusammenbauteil nach Anspruch 23,
**dadurch gekennzeichnet,**
**daß** das Bauteil (13; 213; 413) im Bereich um den ringförmigen Stanzabschnitt (36; 236; 436) herum eine ringförmige Vertiefung (130; 230; 530) aufweist.

25. Zusammenbauteil nach Anspruch 23 oder 24,
**dadurch gekennzeichnet,**
**daß** die zunächst miteinander einen eingeschlossenen Winkel (α) kleiner als 180° bildenden Schulterflächen (427, 429) des Elementes im Zusammenbauteil zumindest im wesentlichen flachgepreßt werden, wodurch die inneren Seiten der Balken (414, 416) eine Hinterschneidung bilden und die Innenkannten an der Unterseite der Balken einen kleineren Abstand voneinander aufweisen als vor der Anbringung am Bauteil (413), wodurch der formschlüssige Eingriff zwischen dem Bauteil und dem Hohlkörperelement (411) verbessert ist.

26. Matrize zur Anbringung eines Hohlkörperelementes nach einem der Ansprüche 15 bis 22 an ein Bauteil,
**dadurch gekennzeichnet,**
**daß** die Matrize an ihrer freien, dem Bauteil zugewandten Stirnseite (120; 520) einen in Draufsicht und im Außenumriß zumindest im wesentlichen rechteckigen Formvorsprung (118; 518) aufweist, dessen Breite dem Abstand zwischen zwei Balken (14, 16; 414, 416) des Hohlkörperelementes (11; 411)abzüglich der doppelten Bauteildicke entsprechen und dessen Länge der Länge des Elementes (11; 411) parallel zu den Balken entspricht und daß innerhalb des rechteckigen Umrisses des Vorsprungs dieser einen Ringvorsprung (126; 526) aufweist, der eine Verformung des Bauteils in eine um den Stanzabschnitt des Hohlkörperelementes gebildeten Hinterschneidung bewirkt und eine mittlere Bohrung (124; 524) aufweist, die mit einem ringförmigen Stanzabschnitt (36; 436) des Hohlkörperelementes zusammenarbeitet, um einen Stanzbutzen aus dem Bauteil bei der Anbringung des Hohlkörperelementes am Bauteil zu bewirken.

27. Matrize nach Anspruch 26,
**dadurch gekennzeichnet,**
**daß** die Matrize in Draufsicht kreisrund ist, jedoch an einer oder mehreren Stellen am Außenumfang ein Orientierungsmerkmal (116; 516) aufweist, das der positionsrichtigen Anbringung in ein Werkzeug dient.

28. Matrize, insbesondere zur Anwendung mit einem Hohlkörperelement mit zwei parallel zueinander verlaufenden, die Balken bildenden Nuten auf der Bauteilseite,
**dadurch gekennzeichnet,**
**daß** die Stirnseite (320) der Matrize mit zwei parallel zueinander verlaufenden, balkenartigen Vorsprüngen (246; 248) auf ihrer dem Bauteil zugewandten Stirnseite versehen ist, wobei die balkenartigen Vorsprünge eine maximale Breite aufweisen, die zumindest im wesentlichen der Breite der U-förmigen Nuten (223, 225) des Hohlkörperelements abzüglich der doppelten Dicke des Bauteils entspricht und eine Länge haben, die zumindest im wesentlichen der Länge der U-förmigen Nuten entspricht und daß zwischen den Balken die Matrize einen Ringvorsprung aufweist, der eine Verformung des Bauteils in eine um den Stanzabschnitt des Hohlkörperelementes gebildeten Hinterschneidung bewirkt und eine mittlere Bohrung (324) aufweist, die mit einem ringförmigen Stanzabschnitt (236) des Hohlkörperelementes zusammenarbeitet, um einen Stanzbutzen aus dem Bauteil bei der Anbringung des Hohlkörperelementes am Bauteil zu bewirken.

29. Matrize nach Anspruch 28,
**dadurch gekennzeichnet,**
**daß** die Matrize in Draufsicht kreisrund ist, jedoch an einer oder mehreren Stellen am Außenumfang ein Orientierungsmerkmal (316) aufweist, das der positionsrichtigen Anbringung in ein Werkzeug dient.

## Claims

1. Method for manufacturing hollow body elements (11; 211; 411) such as nut elements for attachment to components (13; 213; 413) normally consisting of sheet metal, in particular for the manufacture of hollow body elements having an at least substantially square or rectangular outer periphery by cutting individual elements by length from a section (10; 210; 410) present in the form of a bar section or a coil following prior punching of respective apertures (98; 298; 498) in the section and optionally after subsequent formation of a thread cylinder (110; 310; 510), wherein an upsetting process is carried out prior to or after the piercing of the section in order to produce by material flow a cylindrical or ring-like projection (36; 236; 436) concentric to the aperture (98; 298; 498) or the intended aperture at the side (12; 212; 412) of the section confronting the component,
**characterized in that**
as the section (10; 210; 410) a section is selected which has two bars (14, 16; 214, 216; 414, 416) which extend parallel to the longitudinal sides (18, 20; 218, 220; 418, 420) of the section with a spacing from one another at the side (12; 212) which later confronts the component, wherein the bars are at least substantially rectangular in cross-section, can additionally have a saw tooth form and form a feature providing security against rotation in the finished element (11; 211; 411) and **in that** the projection (36; 236; 436) is, if required, subsequently deformed in a further pressing step into a ring-like piercing section.

2. Method in accordance with claim 1,
**characterized in that**
the upsetting step is carried out **in that** the section (10) is supported in the region of the projection to be produced on a die (32) with a recess (66) having a shape complementary to the shape of the desired projection (36) and is held on all remaining side regions in a corresponding tool (46, 48, 50, 52, 60) and **in that** to produce the material flow into the recess (66) of the die (32) a plunger (28) is pressed into the material at the side (30) of the section (10) remote from the ring projection.

3. Method in accordance with claim 2,
**characterized in that**
the plunger (28) has an outer diameter which corresponds at least substantially to that of the desired projection (36).

4. Method in accordance with claim 2,
**characterized in that**
the plunger has an outer diameter which corresponds at least substantially to the diameter of the aperture which has still to be produced.

5. Method in accordance with one of the preceding claims,
**characterized in that**,
in a further method, step an indenting process is carried out at the free exposed end face of the ring projection to produce a breakaway edge (94) for the piercing slug (96) during the subsequent piercing.

6. Method in accordance with claim 5,
**characterized in that**
after the indenting process the element is pierced using a hole punch and the corresponding die, with the hole punch being guided concentrically to the indentation (92) formed by the indenting process.

7. Method in accordance with one of the preceding claims,
**characterized in that**
a dilation process is carried out after the piercing in order to provide the pierced projection (36; 236) with an outer wall (106; 306) which diverges substantially conically in the direction of its free end face.

8. Method in accordance with claim 7,
**characterized in that**
during the dilation process a conical recess (102, 302, 502) forming a chamfer is produced concentrically to the punched aperture (98) in the free end of the projection, the chamfer likewise diverging in the direction of the end face of the ring projection.

9. Method in accordance with claim 7 or claim 8,
**characterized in that**
the cutting to length of the element from the section (10, 210, 410) takes place following the dilation process.

10. Method in accordance with one of the claims 7 or 8,
**characterized in that**
the dilation process takes place as a calibration step after the cutting to length of the respective element from the section.

11. Method in accordance with one of the preceding claims,
**characterized in that**
the respective method steps are carried out in a stamping press (36) using a progressive tool (26).

12. Method in accordance with any one of the preceding claims
**characterized in that**
the section (410) has in cross-section an at least substantially rectangular central region (417) and, at the left and right side of this, wings (419, 421) integral therewith which extend at the component side (412) beyond the central region and there form the two bars (414, 416) which extend parallel to the longitudinal sides (418, 420) of the section and merge via an inclined recess (423, 425) into the lower side of the central region of the section, with the upper sides (427, 429) of the wings having a clear spacing from the top side of the central region of the section and hereby forming shoulders which stand oblique to the side walls of the central region and include an angle (α) to one another which, in relation to the side of the section remote from the component is somewhat smaller than 180°, for example lies in a range from 175° to 160°, wherein, during the attachment of the element to a sheet metal part (413) the obliquely standing wings are pressed flat.

13. Method in accordance with any one of the claims 1 to 11,
**characterized in that**
as the section a section (210) is selected which has two grooves (218, 220) in the region of the longitudinal sides (218, 220) at the side later confronting the component (213), with the sides of the grooves adjacent the longitudinal sides bounding the bars (214, 216) at the inner sides adjacent the projection (236).

14. Method in accordance with any one of the preceding claims,
**characterized in that**
a cold rolled section is selected as the section (10; 210; 410).

15. Hollow body element (11; 211; 411) for attachment to a component consisting in particular of sheet metal, wherein the hollow body element has a centrally arranged punched aperture (98, 298, 498) extending perpendicular to the component side (12; 212; 412), the punched aperture optionally having a thread cylinder (110; 310; 510) and a ring-like projection (36; 236; 436) is present at the side (12; 212, 412) of the hollow body element confronting the component and concentric to the aperture,
**characterized in that**
the hollow body element has bars (14, 16; 214, 216; 414, 416) extending parallel to one another at two opposite sides which form with the component a security against rotation with the component, **in that** the ring-like projection is formed as a piercing section and **in that** a recessed region (22; 240; 422) is present between the bars and the ring-like piercing section, with bars preferably only being present on two opposite sides of the hollow body element and forming contact surfaces for the component which are sufficiently large that the surface pressure lies below the yield point of the component.

16. Hollow body element in accordance with claim 15,
**characterized in that**
the end (104; 304; 504) of the ring-like projection (36; 236; 436) projects further at the component side of the hollow body element than the bars (14, 16; 214; 216; 414, 416).

17. Hollow body element in accordance with claim 15 or 16,
**characterized in that**
the recessed region (22; 422) between the bars is at least substantially rectangular in an external outline and **in that** the ring projection (36; 436) is arranged at the centre of the recess and has a distance from the boundary of the recess on all sides.

18. Hollow body element in accordance with claims 15 or 16,
**characterized in that**
the two bars (214, 216) which extend parallel to one another on opposite sides of the hollow body element are bounded or formed by two. grooves (223, 225) which likewise extend parallel to one another and which have an at least substantially rectangular cross-section and **in that** the ring recess (240) is a conical recess which is formed in the component side (212) of the hollow body element in the region between the two grooves, with the conical recess increasingly diverging in the direction towards the component side (212).

19. Hollow body element in accordance with claim 18,
**characterized in that**
a conical ring shoulder (242) is present at the side (230) of the hollow body element (211) remote from the component side (212) with approximately complementary shape to the conical ring recess (240) in the component side of the element.

20. Hollow body element in accordance with claim 15,
**characterized in that**
it has in cross-section an at least substantially rectangular central region (417) and, to the left and right of this, wings (419, 421) integral therewith which extend at the component side (412) beyond the central region and there form two bars (414, 416) which extend parallel to the longitudinal sides (420) of the section and merge via an inclined recess (423, 425) into the lower side of the central region of the section, with the top sides (427, 429) of the wings having a clear spacing from the top side of the central region of the section and hereby forming shoulders which extend obliquely to the side walls of the central region and include an angle (α) with one another which, in relation to the side of the section remote from the component side is somewhat smaller than 180°, for example lies in a range of 175° to 160°.

21. Hollow body element in accordance with one the claims 15 to 20,
**characterized in that**
the ring-like piercing section (36; 236; 436) has an at least substantially conical outer wall which diverges going in a direction towards the free end (104; 304; 504) of the piercing section and hereby forms a piercing edge (100; 300; 500) with the end face, with the conically extending outer wall of the ring-like piercing section forming an undercut with the recess (108; 308) which is designed to take up sheet .metal material.

22. Hollow body element in accordance with one of the preceding claims 15 to 21,
**characterized in that**
the end of the ring-like piercing section has a conical recess (102) forming a chamfer which diverges going in the direction of the free end face of the piercing section.

23. Component assembly consisting of a component (13; 213; 413) and a hollow body element (11; 211; 411) in accordance with one of the preceding claims 15 to 22 attached thereto,
**characterized in that**
the component is deformed into the undercut (108; 308) formed by the ring-like piercing section and in the recessed region (22; 240, 223, 225; 422) adjacent to the said bars and **in that** the hollow body element is hereby locked to the component in a manner secure against pull-out and rotation.

24. Component assembly in accordance with claim 23,
**characterized in that**
the component (13; 213; 413) has a ring-like recess (130; 230; 530) in the region around the ring-like piercing section (36; 236; 436).

25. Component assembly in accordance with claim 23 and 24,
**characterized in that**
the shoulder surfaces (427, 429) of the element which initially form an enclosed angle (α) with one another smaller than 180° are at least substantially pressed flat in the component assembly, whereby the inner side of the bars (414, 416) form an undercut and the inner edges at the lower side of the bars have a smaller spacing from one another than before the attachment to the component (413), whereby the form locked engagement between the component and the hollow body element (411) is improved.

26. Die for the attachment of a hollow body element in accordance with one of the claims 15 to 22 to a component,
**characterized in that**
the die has at its free end face (120; 520) confronting the component a shaped projection (118; 518) which is at least substantially rectangular in plan view and in outline, the width of the rectangular projection corresponding to the spacing between two bars (14, 16; 414, 416) of the hollow body element (11; 411) less twice the component thickness and the length of the rectangular projection corresponding to the length of the element (11; 411) parallel to the bars and **in that** within the rectangular outline of the projection the latter has a ring projection (126; 526) which brings about a deformation of the component into an undercut formed around the piercing section of the hollow body element and a central bore (124; 524) which cooperates with a ring-like piercing section (36; 436) of the hollow body element in order to bring about a piercing slug from the component during the attachment of the hollow body element to the component.

27. Die in accordance with claim 26,
**characterized in that**
the die is circular in plan view but has an orientation feature (116; 516) at one or more points at the outer periphery which serves for the positionally correct mounting in a tool.

28. Die in particular for use with a hollow body element having two grooves at the component side which extend parallel to another and form the bars,
**characterized in that**
the end face (320) of the die is provided with two bar-like projections (246; 248) extending parallel to one another at its end face confronting the component, with the bar-like projections having a maximum width which corresponds at least substantially to the width of the U-shaped grooves (223, 225) of the hollow body element less twice the thickness of the component and a length which corresponds at least substantially to the length of the U-shaped grooves and **in that** the die has a ring projection between the bars which brings about a deformation of the component into an undercut formed around the piercing section of the hollow body element and a central bore (324) which cooperates with a ring-like piercing section (236) of the hollow body element in order bring about a piercing slug from the component during the attachment of the hollow body element to the component.

29. Die in accordance with claim 28,
**characterized in that**
the die is circular in plan view but has an orientation feature (316) at one or more points at the outer periphery which serves for the positionally correct mounting in a tool.

## Revendications

1. Procédé pour fabriquer des éléments creux (11 ; 211 ; 411), comme des éléments d'origine à fixer sur des pièces détachées (13 ; 213 ; 413) habituellement en tôle, en particulier pour fabriquer des éléments creux avec un contour extérieur au moins substantiellement carré ou rectangulaire, par tronçonnement d'éléments individuels à partir d'un profilé (10 ; 210 ; 410) se présentant sous la forme d'une barre profilée ou d'un rouleau après un découpage préalable de trous respectifs (98 ; 298 ; 498) dans le profilé, et le cas échéant, avec formation consécutive d'un cylindre taraudé (110 ; 310 ; 510), dans lequel une opération de traversée est effectuée avant ou après la perforation du profilé afin de générer par écoulement de matière une saillie cylindrique ou annulaire (36 ; 236 ; 436), concentrique par rapport à la perforation (98 ; 298 ; 498) ou à la perforation prévue, du côté du profilé (12 ; 212 ; 412) tourné vers la pièce détachée,
**caractérisé en ce que**
comme profilé (10 ; 210 ; 410), on choisit un profilé qui présente sur son côté (12 ; 212 ; 412) ultérieurement tourné vers la pièce détachée deux barres (14, 16 ; 214, 216 ; 414, 416) présentant un espacement l'une par rapport à l'autre, s'étendant en parallèle aux côtés longitudinaux (18, 20 ; 218, 220 ; 418, 420) du profilé et de section au moins substantiellement rectangulaire, les barres pouvant en outre présenter un motif en dents de scie et constituer une caractéristique anti-torsion dans l'élément fini (11 ; 211 ; 411), et **en ce que** la saillie (36 ; 236 ; 436) est le cas échéant façonnée ensuite au cours d'une opération de pressage supplémentaire en une découpe annulaire.

2. Procédé selon la revendication 1, **caractérisé en ce que** l'opération de traversée est réalisée **en ce qu'**au niveau de la saillie à générer, le profilé (10) prend appui sur une matrice (32) avec un renfoncement (66) d'une forme complémentaire à la forme de la saillie (36) souhaitée et est retenu sur l'ensemble des zones latérales restantes dans un outil correspondant (46, 48, 50, 52, 60), et **en ce qu'**un poinçon (28) est poussé dans la matière du côté (30) du profilé (10) détourné de la saillie annulaire pour générer le flux de matière à l'intérieur du renfoncement (66) de la matrice (32).

3. Procédé selon la revendication 2, **caractérisé en ce que** le poinçon (28) présente un diamètre extérieur qui correspond au moins substantiellement à la saillie (36) souhaitée.

4. Procédé selon la revendication 2, **caractérisé en ce que** le poinçon présente un diamètre extérieur qui correspond au moins substantiellement au diamètre de la perforation restant à générer.

5. Procédé selon l'une quelconque des revendications précédentes, **caractérisé en ce que** dans une étape supplémentaire, une opération d'emboutissage est effectuée sur la face avant exposée de la saillie annulaire afin de générer un bord de rupture (94) pour la débouchure de poinçonneuse (96) lors de la perforation consécutive.

6. Procédé selon la revendication 5, **caractérisé en ce qu'**après l'opération d'emboutissage l'élément est perforé à l'aide d'un perforateur et d'une matrice adéquate, dans lequel le perforateur est guidé de façon concentrique par rapport au godet (92) généré par l'opération d'emboutissage.

7. Procédé selon l'une quelconque des revendications précédentes, **caractérisé en ce qu'**après la perforation, une opération d'évasement est effectuée pour munir la saillie perforée (36 ; 236) d'une paroi extérieure (106 ; 306) de forme au moins substantiellement conique et divergeant en direction de sa face avant libre.

8. Procédé selon la revendication 7, **caractérisé en ce que** lors de l'opération d'évasement, un renfoncement conique (102, 302, 502) formant une face de dépouille est généré de façon concentrique par rapport à la perforation (98) dans l'extrémité avant libre de la saillie, le renfoncement divergeant également en direction de la face avant de la saillie annulaire.

9. Procédé selon la revendication 7 ou 8, **caractérisé en ce que** le tronçonnement de l'élément à partir du profilé (10, 210, 410) a lieu après l'opération d'évasement.

10. Procédé selon l'une quelconque des revendications 7 ou 8, **caractérisé en ce que** l'opération d'évasement a lieu comme une étape de calibrage après le tronçonnement de l'élément respectif à partir du profilé.

11. Procédé selon l'une quelconque des revendications précédentes, **caractérisé en ce que** les étapes respectives sont effectuées sur une presse à découper (36) en utilisant un outil progressif composé (26).

12. Procédé selon l'une quelconque des revendications précédentes, **caractérisé en ce qu'**en section, le profilé (410) présente une zone centrale (417) au moins substantiellement rectangulaire, et à gauche et à droite de celle-ci, des ailes (419, 421) intégrées à celle-ci, les ailes s'étendant au-delà de la zone centrale du côté pièce détachée (412) et y formant deux barres (414, 416) qui s'étendent en parallèle aux côtés longitudinaux (418, 420) du profilé et passent par un renfoncement oblique (423, 425) à la face inférieure de la zone centrale du profilé, les faces supérieures (427, 429) des ailes étant nettement espacées par rapport à la face supérieure de la zone centrale du profilé et formant ainsi des épaulements qui sont placés de façon oblique par rapport aux parois latérales de la zone centrale et forment ensemble un angle (α) qui est légèrement inférieur à 180° par rapport au côté du profilé détourné du côté pièce détachée, situé par exemple dans la plage de 175° à 160°, les ailes placées de façon oblique étant aplaties lorsque l'élément est fixé sur une pièce en tôle (413).

13. Procédé selon l'une quelconque des revendications 1 à 11, **caractérisé en ce que** comme profilé (210), on choisit un profilé qui présente au niveau des côtés longitudinaux (218, 220) du côté (212) ultérieurement tourné vers la pièce détachée (213) des rainures (218, 220) dont les côtés tournés vers les côtés longitudinaux délimitent les barres (214, 216) du côté intérieur tourné vers la saillie (236).

14. Procédé selon l'une quelconque des revendications précédentes, **caractérisé en ce que** comme profilé (10 ; 210 ; 410), on choisit un profilé laminé à froid.

15. Elément creux (11 ; 211 ; 411) à fixer sur une pièce détachée en particulier en tôle, dans lequel l'élément creux présente une perforation (98, 298, 498) disposée de façon centrale et s'étendant perpendiculairement au côté (12 ; 212 ; 412) de la pièce détachée, la perforation pouvant le cas échéant présenter un cylindre taraudé (110 ; 310 ; 510), et une saillie annulaire (36 ; 236 ; 436) existe du côté (12 ; 212, 412) tourné vers la pièce détachée de l'élément creux et de façon concentrique à la perforation,
**caractérisé en ce que**
l'élément creux présente des barres (14, 16 ; 214, 216 ; 414, 416) s'étendant en parallèle l'une à l'autre sur deux côtés opposés, les barres formant avec la pièce détachée un dispositif anti-torsion ; **en ce que** la saillie annulaire (36 ; 236 ; 436) est réalisée comme une découpe, et **en ce qu'**entre les barres et la découpe annulaire, il existe une zone renfoncée (22 ; 240 ; 422), dans lequel des barres existent de préférence uniquement sur deux côtés opposés de l'élément creux et forment des surfaces d'appui pour la pièce détachée qui sont suffisamment grandes pour que la pression superficielle se situe au-dessous de la limite d'écoulement de la pièce détachée.

16. Elément creux selon la revendication 15, **caractérisé en ce que** du côté pièce détachée de l'élément creux, l'extrémité avant (104 ; 304 ; 504) de la saillie annulaire (36 ; 236 ; 436) dépasse plus que les barres (14, 16 ; 214, 216 ; 414, 416).

17. Elément creux selon la revendication 15 ou 16, **caractérisé en ce que** la zone renfoncée (22 ; 422) entre les barres est de contour extérieur au moins substantiellement rectangulaire, et **en ce que** la saillie annulaire (36 ; 436) est disposée au milieu du renfoncement et présente sur tous les côtés un espacement par rapport à la limite du renfoncement.

18. Elément creux selon l'une quelconque des revendications 15 ou 16, **caractérisé en ce que** les deux barres (214, 216) s'étendant en parallèle l'une à l'autre sur des côtés opposés de l'élément creux sont délimitées ou constituées par deux rainures (223, 225) s'étendant également en parallèle l'une à l'autre, qui présentent au moins substantiellement une section rectangulaire, et **en ce que** le renfoncement annulaire (240) est un renfoncement conique qui est réalisé dans le côté pièce détachée (212) de l'élément creux dans la zone entre les deux rainures, le renfoncement conique divergeant en direction du côté pièce détachée (212).

19. Elément creux selon la revendication 18, **caractérisé en ce que** du côté (230) détourné du côté pièce détachée (212) de l'élément creux (211) il existe un épaulement annulaire conique (242) d'une forme approximativement complémentaire au renfoncement annulaire conique (240) dans le côté pièce détachée de l'élément.

20. Elément creux selon la revendication 15, **caractérisé en ce qu'**en section, il présente une zone centrale (417) au moins substantiellement rectangulaire, et à gauche et à droite de celle-ci, des ailes (419, 421) intégrées à celle-ci, les ailes s'étendant au-delà de la zone centrale du côté pièce détachée (412) et y formant deux barres (414, 416) qui s'étendent en parallèle aux côtés longitudinaux (420) du profilé et passent par un renfoncement oblique (423, 425) à la face inférieure de la zone centrale du profilé, les faces supérieures (427, 429) des ailes étant nettement espacées par rapport à la face supérieure de la zone centrale du profilé et forment ainsi des épaulements qui sont placés de façon oblique par rapport aux parois latérales de la zone centrale et forment ensemble un angle (α) qui est légèrement inférieur à 180° par rapport au côté du profilé détourné du côté pièce détachée, par exemple situé dans la plage de 175° à 160°.

21. Elément creux selon l'une quelconque des revendications 15 à 20, **caractérisé en ce que** la découpe annulaire (36 ; 236 ; 436) présente une paroi extérieure au moins substantiellement conique qui diverge en direction de l'extrémité avant libre (104 ; 304 ; 504) de la découpe et forme ainsi avec l'extrémité avant une arête d'estampage (100 ; 300 ; 500), la paroi extérieure s'étendant de façon conique de la découpe annulaire formant avec le renfoncement (108 ; 308) une contre-dépouille qui est conçue pour recevoir un matériau de tôle.

22. Elément creux selon l'une quelconque des revendications 15 à 21 -, **caractérisé en ce que** l'extrémité frontale de la découpe annulaire présente un renfoncement conique (102) formant un chanfrein qui diverge en direction de la face frontale libre de la découpe.

23. Pièce d'assemblage, composée d'une pièce détachée (13 ; 213 ; 413) et d'un élément creux (11 ; 211 ; 411) fixé sur celle-ci selon l'une quelconque des revendications précédentes 15 à 22, **caractérisée en ce que** la pièce détachée est façonnée dans la contre-dépouille (108 ; 308) formée par la découpe annulaire et façonnée dans la zone renfoncée (22 ; 240, 223, 225 ; 422) de façon adjacente auxdites barres, et **en ce que** l'élément creux est ainsi verrouillé avec la pièce détachée de façon protégée contre l'extraction et la torsion.

24. Pièce d'assemblage selon la revendication 23, **caractérisée en ce que** la pièce détachée (13 ; 213 ; 413) présente dans la zone autour de la découpe annulaire (36 ; 236 ; 436) un renfoncement annulaire (130 ; 230 ; 530).

25. Pièce d'assemblage selon la revendication 23 ou 24, **caractérisée en ce que** les surfaces d'épaulement (427, 429) de l'élément, qui forment d'abord ensemble un angle inclus (α) inférieur à 180°, sont au moins substantiellement aplaties dans la pièce d'assemblage, de manière à ce que les faces intérieures des barres (414, 416) forment une contre-dépouille et les bords intérieurs sur la face inférieure des barres présentent un espacement mutuel inférieur à celui avant la fixation sur la pièce détachée (413), de manière à améliorer l'engagement positif entre la pièce détachée et l'élément creux (411).

26. Matrice pour fixer un élément creux selon l'une quelconque des revendications 15 à 22 sur une pièce détachée, **caractérisée en ce que** la matrice présente sur sa face avant libre (120 ; 520), tournée vers la pièce détachée, une saillie moulée (118 ; 518) au moins substantiellement rectangulaire en vue de dessus et en contour extérieur, la largeur de la saillie correspondant à l'espacement entre deux barres (14, 16 ; 414, 416) de l'élément creux (11 ; 411) moins deux fois l'épaisseur de pièce détachée et sa longueur correspondant à la longueur de l'élément (11 ; 411) en parallèle aux barres, et **en ce qu'**à l'intérieur du contour rectangulaire de la saillie, celle-ci présente une saillie annulaire (126 ; 526) qui provoque une transformation de la pièce détachée en une contre-dépouille formée autour de la découpe de l'élément creux et présente un alésage central (124 ; 524) qui coopère avec une découpe annulaire (36 ; 436) de l'élément creux pour créer une débouchure de poinçonneuse à partir de la pièce détachée lorsque l'élément creux est fixé sur la pièce détachée.

27. Matrice selon la revendication 26, **caractérisée en ce que** la matrice est circulaire en vue de dessus, mais présente un repère d'orientation (116 ; 516) à un ou plusieurs endroits sur la circonférence extérieure, le repère servant à fixer un outil en position correcte.

28. Matrice, en particulier pour une utilisation avec un élément creux avec deux rainures côté pièce détachée qui s'étendent en parallèle l'une à l'autre et forment des barres, **caractérisée en ce que**
la face avant (320) de la matrice est munie de deux saillies de type barre (246 ; 248) s'étendant en parallèle l'une à l'autre sur sa face avant tournée vers la pièce détachée, les saillies de type barre présentant une largeur maximale qui correspond au moins substantiellement à la largeur des rainures en forme de U (223, 225) de l'élément creux moins deux fois l'épaisseur de la pièce détachée et ayant une longueur qui correspond au moins substantiellement à la longueur des rainures en forme de U, et **en ce que** la matrice présente entre les barres une saillie annulaire qui provoque une transformation de la pièce détachée en une contre-dépouille formée autour de la découpe de l'élément creux et présente un alésage central (324) qui coopère avec une découpe annulaire (236) de l'élément creux pour créer une débouchure de poinçonneuse à partir de la pièce détachée lorsque l'élément creux est fixé sur la pièce détachée.

29. Matrice selon la revendication 28, **caractérisée en ce que** la matrice est circulaire en vue de dessus, mais présente un repère d'orientation (316) à un ou plusieurs endroits sur la circonférence extérieure, le repère servant à la fixation en position correcte dans un outil.
